# EUROPÄISCHE PATENTANMELDUNG

(11) **EP 1 453 013 A1**
(43) Veröffentlichungstag der Anmeldung: **01.09.2004**
(21) Anmeldenummer: 03004471.3
(22) Anmeldetag: 27.02.2003
(51) Int. Cl.: G07C 1/10, G06F 17/60

(54) **System, Vorrichtung und Verfahren zum Überwachen von Wegrouten**

(71) Anmelder: ProTime GmbH für Informationslogistik, 83209 Prien am Chiemsee (DE); Trurnit&Partner Medienbeteiligungs GmbH, 85521 Ottobrunn (DE)
(72) Erfinder: Waizmann, Gerd, D-83083 Riedering (DE); Steinert, Frank, D-83024 Rosenheim (DE); Leutner, Gerhard, D-83233 Bernau am Chiemsee (DE); Riesch, Josef, D-85617 Assling (DE); Heiss, Manfred, D-85635 Höhenkirchen/Siegertsbrunn (DE); Janetzki, Herbert, D-80333 München (DE)
(74) Vertreter: Becker Kurig Straus

(57) **Zusammenfassung**

Die vorliegende Erfindung betrifft ein Verfahren, eine Vorrichtung und ein System zum Überwachen von Personen, die eine vorgeschriebene Wegroute zu passieren haben bzw. zum Protokollieren der von diesen Personen zurückgelegten Wegroute. Insbesondere betrifft die vorliegende Erfindung die automatische Aufzeichnung und Auswertung der erfassten Positionsdaten.

Eine Vorrichtung zum Erfassen und Dokumentieren von Protokolldaten, insbesondere zum Protokollieren der Tätigkeit einer Person, die die Vorrichtung (10, 420, 430) bei sich führt umfasst eine Eingabekomponente (220, 225) zum Erfassen von Eingaben, um Protokolldaten zu erzeugen, die während einer Fortbewegung auftretende Ereignisse enthalten, eine Speicherkomponente (211) zum Speichern der Protokolldaten; und eine Komponente zum Auslesen (211, 230, 235, 260, 270) der vorliegenden Daten. Eine Vorrichtung zum Auswerten von Protokolldaten, insbesondere zum Auswerten von Protokolldaten, die von einer oder mehreren Vorrichtungen zum Erfassen und Dokumentieren von Protokolldaten geliefert werden, umfasst eine Komponente (340, 25, 27) zum Bereitstellen von Daten, die in der einen oder den mehreren Vorrichtungen (10, 420, 430) zum Erfassen und Dokumentieren von Protokolldaten gespeichert sind; eine Komponente (311) zum Ableiten von einem oder mehreren Bewertungskriterien aus den Daten; und eine Schnittstellenkomponente (360) zum Übertragen von einem oder mehreren Bewertungskriterien mittels einer Datenkommunikationsverbindung zu einer weiteren verarbeitenden Vorrichtung (23, 400). Die Vorrichtung führen die jeweiligen entsprechenden Verfahren zum Erfassen und Dokumentieren von Protokolldaten bzw. zum Auswerten von Protokolldaten aus.

## Beschreibung

Die vorliegende Erfindung betrifft ein Verfahren, eine Vorrichtung und ein System zum Überwachen von Personen, die eine vorgeschriebene Wegroute zu passieren haben bzw. zum Protokollieren der von diesen Personen zurückgelegten Wegroute. Insbesondere betrifft die vorliegende Erfindung die automatische Aufzeichnung und Auswertung der erfassten Positionsdaten.

Die Tätigkeiten von Verteilern, die bei einem Verteilerunternehmen beschäftigt sind, das seinen Kunden anbietet, Werbematerial, Werbebroschüren, Informationsmaterial, Postwurfsendungen, Flyer etc. innerhalb eines umrissenen geographischen Gebiets zu verteilen, unterliegt meist nicht der direkten Kontrolle durch den Auftraggeber. Dies ist leicht verständlich, da die mit der Verteilung beauftragten Verteiler sich meist innerhalb eines beträchtlich ausgedehnten geographischen Gebietes bewegen. Hier sollte eine Überwachung ermöglichen, eventuell Hinweise darauf zu erhalten, ob ein mit der Verteilung betrauter Mitarbeiter das zu verteilende Material einfachheitshalber entsorgt, sich für die für die Verteilung vorgesehene Zeit an einem unbeobachteten Platz aufhält oder in sonstiger Weise seiner eigentlichen Pflicht nicht nachkommt. Eine derartige Arbeitsverweigerung ist kaum zu entdecken, da meist keine unmittelbare Rückmeldung von den Personen, die eine Zustellung erhalten, erwartet werden kann, die sich für eine Überwachung nutzen ließe.

Ferner liegen meist über die geographischen Gebiete, in denen die Verteilung stattfindet, keine exakten Daten vor, aus denen z.B. sich auf die benötigte Menge an zu verteilendem Material rückschließen ließe oder auf den zu erwartenden Zeitbedarf bzw. Personalbedarf für die Verteilung.

Ähnliche Probleme stellen sich bei der Überwachung der Tätigkeit von Mitarbeitern im Bereich der Logistik, in dem Waren oft mit Hilfe von zahlreichen verschiedenen Transportmitteln zwischen zahlreichen Zwischenlagern verschickt werden und somit in viele verschiedene Hände geraten. Im Fall der Logistik steht jedoch nicht die Tätigkeitsüberwachung der Mitarbeiter direkt im Vordergrund, sondern die Überwachung der behandelten Waren zum Zwecke der Kundeninformation, um sicherstellen zu können, dass die Position jeder beliebigen Ware jederzeit ermittelbar und abrufbar ist. Indirekt lässt sich aus diesen Informationen auf die Tätigkeit der Mitarbeiter schließen. Die DE 100 43 752 A1 offenbart solch ein System und Verfahren zum Managen von Logistikvorgängen und zur Sendungsverfolgung. Die DE 39 43 311 C2 offenbart ferner ein mobiles Terminal, das typischerweise heutzutage in ähnlicher Form bei Paket- und Schnelllieferdiensten eingesetzt wird.

Ferner zeigen sich ähnliche Probleme bei der Überwachung von Sicherheitspersonal (Nachtwächter, Sicherheitsdienst etc.), die vorgeschriebene Wegstrecken regelmäßig abgehen/abfahren bzw. vorgegebene Wegpunkte erreichen müssen. Hier ist eine direkte Überwachung durch die Vorgesetzten aufgrund der nächtlichen Tätigkeit meist nur stichprobenweise möglich, so dass hierzu schon früh automatisierte Kontrollvorrichtungen und Systeme um Einsatz gekommen sind. CH 60400 und DE 690 09 156 T2 offenbaren typische Kontrollvorrichtungen bzw. Kontrollverfahren, die im Zusammenhang mit der Überwachung von Sicherheitspersonal eingesetzt werden können. Diese Kontrollvorrichtungen bzw. Kontrollverfahren werden typischerweise in einem festgelegten gleichbleibenden geographischen Gebiet etabliert, z.B. in einer Firma, in einem Kraftwerk, in einem Firmengelände etc. verwendet, so dass hierbei fest installierte Kontrollpunkte eingerichtet werden können, die von dem Sicherheitspersonal regelmäßig erreicht werden müssen. Ein derartiges Verfahren bzw. eine derartige Vorrichtung eignet sich ersichtlich nicht für die Verwendung zur Überwachung von Verteilern wie vorstehend ausgeführt.

Eine Aufgabe der vorliegenden Erfindung ist es, eine Vorrichtung, Verfahren und ein System bereitzustellen, das eine möglichst einfache Überwachung von Verteilern gestattet. Ferner ist es eine weitere Aufgabe der vorliegenden Erfindung, simultan mit der Überwachung der Verteiler die Vorrichtung, das Verfahren und das System derart einzusetzen, dass Daten erfasst werden, die zur Information des Kunden/Auftraggebers dienen, die eine Qualitätskontrolle des Auftrags ermöglichen und die für eine Planung einer zukünftigen Verteilaktion von Interesse sind.

Die vorstehend angeführten Probleme werden durch ein System, Verfahren und Vorrichtungen, wie sie in den unabhängigen Ansprüchen definiert sind, gelöst. Weitere Ausführungsformen sind in den abhängigen Ansprüchen wiedergegeben.

Gemäß einem ersten Aspekt der Erfindung wird eine Vorrichtung zum Erfassen und Dokumentieren von Protokolldaten, insbesondere zum Protokollieren von Ereignissen während einer Fortbewegung einer mit einer Verteilung von Zustellsendungen beauftragten Person, die die Vorrichtung bei sich fiihrt, bereitgestellt. Die Vorrichtung umfasst eine Eingabekomponente zum Erfassen von Eingaben, um Protokolldaten zu erzeugen, die während einer Fortbewegung auftretende Ereignisse enthalten, eine Speicherkomponente zum Speichern der Daten und eine Komponente zum Auslesen von mindestes einem Teil der in der Speicherkomponente gespeicherten Daten.

Die Eingabekomponente kann technisch als eine manuell von dem Benutzer zu bedienende Tastenkomponente mit einer oder mehreren Tasten, Schaltern; Aktuatoren etc. umgesetzt sein. Ferner sind als die Eingabekomponente auch ein oder mehrere Sensoren wie zum Beispiel ein oder mehrere Bewegungssensoren, Funktransponder, Infrarotempfänger und der gleichen vorgesehen, die alternativ zu einer Tastenkomponente verwendet werden können oder manuelle von dem Benutzer vorzunehmende Eingaben ergänzen und/oder ersetzen können.

Die Komponente zum Auslesen von mindestes einem Teil der in der Speicherkomponente gespeicherten Daten kann zum Beispiel ein Display sein, das Daten anzeigt und es einem Benutzer gestattet, die Daten abzulesen. Ferner kann die Komponente zum Auslesen eine unioder bi-direktionale Schnittstelle sein, mittels derer mindestes ein Teil der Daten ausgelesen werden kann. Ferner kann die Komponente zum Auslesen ein entfernbar gekoppeltes Speichermodul bezeichnen, das zugleich als Speicherkomponente dienen kann. Die Speicherkomponente kann ferner ein Pufferspeicher mit geringer Speicherkapazität sein, wenn die von dem QS-Modul erfassten Daten in ausreichend kurzen zeitlichen Abständen ausgelesen werden, d.h. im wesentlichen in Echtzeit.

Gemäß einer Ausfiihrungsform der Erfindung umfasst die Vorrichtung ferner eine Erfassungskomponente zum Erfassen von Positionsdaten, die in der Speicherkomponente gespeichert werden können. Die Erfassungskomponente kann vorzugsweise ein GPS-Modul sein. Die Protokolldaten können Zustellereignisse, insbesondere die klassifizierenden Ereignisse "Zustellung erfolgreich" und "Zustellung verhindert" betreffen, wobei die Protokolldaten in Bezug zu mindestens einem Teil der erfassten Positionsdaten stehen können. Gemäß einer Ausführungsform der Erfindung umfasst die Vorrichtung ferner eine Komponente zum Detektieren von einem oder mehreren geographischen Fixpunkten anhand der erfassten Positionsdaten. Weiterhin umfasst die Vorrichtung gemäß einer Ausführungsform der Erfindung eine Komponente zum Ableiten von einem oder mehreren Bewertungskriterien aus den verfügbaren Daten, die in der Speicherkomponente gespeichert sind. Die Bewertungskriterien umfassen mindestens eines der Kriterien, die sich aus maximale, mittlere und lokale Fortbewegungsgeschwindigkeit; maximale und akkumulierte Standzeit; maximale und mittlere zusammenhängende Fortbewegungsstrecke; maximale und mittlere zusammenhängende Fortbewegungszeitdauer; Gesamtzeit der Datenerfassung, totale und selektive Anzahl der erfassten Protokolldaten bzw. Protokolldatenverhältnisse zusammensetzen können.

Gemäß einer weiteren Ausführungsform der Erfindung ist die Schnittstellenkomponente geeignet, Konfigurationsdaten zu empfangen. Die Konfigurationsdaten können zur Konfiguration der Erfassungskomponente; und/oder der Eingabekomponente der Schnittstellenkomponente geeignet sein und/oder können Definitionen von der geographische Fixpunkten umfassen. Gemäß einer weiteren Ausführungsform der Erfindung ermöglicht die Schnittstellenkomponente eine lokale oder eine mobile Datenkommunikation, entsprechend ist die Schnittstelle eine lokale Datenschnittstelle oder eine Datenschnittstelle für ein zellulares Mobilkommunikationssystem. Gemäß einer weiteren Ausfiihrungsform der Erfindung ist die Eingabekomponente ferner geeignet, weitere positionsbezogene Daten zu erfassen, die in der Speicherkomponente gespeichert werden und die als Ergänzungsdaten zu digitalen Kartendaten (Straßenkarten, Stadtpläne etc.) dienen.

Gemäß einem ersten Aspekt der Erfindung wird eine Vorrichtung zum Auswerten von Protokolldaten, insbesondere zum Auswerten von Daten, die von einer oder mehreren Vorrichtungen zum Erfassen und Dokumentieren von Protokolldaten geliefert werden, bereitgestellt. Die Vorrichtung umfasst eine Komponente zum Bereitstellen von Daten der Vorrichtung zum Erfassen und Dokumentieren von Protokolldaten; eine Speicherkomponente zum Speichern der empfangenen Daten; eine Komponente zum Ableiten von Bewertungskriterien aus den gespeicherten Daten und eine Komponente zum Übertragen der Bewertungskriterien mittels einer Datenkommunikationsverbindung an eine weitere verarbeitende Vorrichtung. Die Vorrichtung kann ebenfalls eine Komponente zum Kombinieren zumindest eines Teils der gespeicherten Daten mit den abgeleiteten Bewertungskriterien einschließen und die Komponente zum Übertragen ermöglicht ebenfalls zumindest Teile der Daten oder der Daten kombiniert mit Bewertungskriterien zu übertragen. Die Komponente zur Bereitstellung der Daten kann eine Eingabekomponente sein, die es erlaubt die Daten manuell einzugeben. Alternativ kann die Komponente zur Bereitstellung eine Schnittstelle zur Datenkommunikation mit der einen oder den mehreren Vorrichtungen zum Erfassen und Dokumentieren von Protokolldaten verbunden sein oder die Komponente zur Bereitstellung ist ein entfernbar gekoppeltes Speicher-Modul bzw. - Medium das von der einen oder den mehrerer Vorrichtungen zum Erfassen und Dokumentieren von Protokolldaten beschrieben wurde. Gemäß einer Ausführungsform der Erfindung umfasst die Vorrichtung eine Komponente zum Darstellen der kombinierten Daten und Bewertungskriterien in einer Weise, dass die Darstellung von der weiteren verarbeitenden Vorrichtung über eine Datenkommunikationsverbindung abgerufen werden kann. Ferner kann die Vorrichtung gemäß einer Ausführungsform der Erfindung Konfigurationsdaten für die Vorrichtungen zum Erfassen und Dokumentieren von Protokolldaten; und eine Schnittstellenkomponente zum Übertragen der Konfigurationsdaten an die Vorrichtungen zum Erfassen und Dokumentieren von Protokolldaten umfassen. Gemäß einer weiteren Ausführungsform der Erfindung umfasst die Vorrichtung eine Schnittstellenkomponente zum Empfangen von Daten der Vorrichtungen zum Erfassen und Dokumentieren von Protokolldaten, wobei die Daten ferner weitere positionsbezogene Daten umfassen, die als Ergänzungsdaten für digitale Kartendaten dienen; und eine Komponente zum Auswerten der positionsbezogenen Daten, um Kartendaten zu aktualisieren.

Gemäß einem ersten Aspekt der Erfindung wird ein Verfahren zum Erfassen und Dokumentieren von Protokolldaten bereitgestellt. Auf eine manuelle Eingabe durch eine Eingabekomponente werden Protokolldaten erzeugt, die während einer Fortbewegung auftretende Ereignisse umfassen. Insbesondere betreffen die Protokolldaten Zustellergebnisse bzw. Zustellerfolgsbewertungen, die von einer Person eingegeben werden, die mit der Zustellung von Zustellsendungen beauftragt ist. Alternativ kann die Eingabekomponente ein Sensorsignal empfangen, das ebenso zur Erzeugung von Protokolldaten führt. Die erfassten Daten werden aus einer Speicherkomponente ausgelesen, so dass eine Weiterbearbeitung möglich ist. Das Verfahren kann erfindungsgemäß das Erfassen von Positionsdaten einschließen, die von einer Erfassungskomponente zum Erfassen von Positionsdaten geliefert wird und von denen zumindest ein Teil in Bezug zu den Ereignissen stehen, die in den Protokolldaten enthalten sind. Das Auslesen kann durch den Benutzer mittels eines Displays manuell erfolgen. Alternativ kann das Auslesen mit Hilfe einer Schnittstelle erfolgen, die zur lokalen und/oder mobilen Datenkommunikation geeignet ist. Weiterhin kann das Auslesen durch entnehmen eines Speicher-Moduls oder -Mediums erfolgen, in dem bzw. auf dem die Daten gespeichert sind.

Gemäß einer weiteren Ausfiihrungsform der Erfindung werden geographische Fixpunkte anhand der erfassten Positionsdaten detektiert. Ferner werden gemäß einer Ausführungsform der Erfindung Bewertungskriterien aus den gespeicherten Daten abgeleitet und gespeichert. Zusätzlich werden gemäß einer Ausführungsform der Erfindung Konfigurationsdaten empfangen, die geeignet sind, das Erfassen von Positionsdaten; das Erfassen von Protokolldaten, das Übertragen von mindestens einem Teil der gespeicherten Daten; und/oder das Detektieren der geographischen Fixpunkten zu bestimmen. Weiterhin kann gemäß einer Ausführungsform der Erfindung das Übertragen des mindestens einen Teil der gespeicherten Daten durch ein Signal initiiert wird, das über die Schnittstellenkomponente von der Vorrichtung zum Auswerten der Protokolldaten empfangen wird. Gemäß einer anderen Ausführungsform der Erfindung werden weiteren positionsbezogenen Daten mittels der Eingabekomponente erzeugt und gespeichert. Die positionsbezogenen Daten betreffen Ergänzungsdaten zu digitalen Kartendaten.

Gemäß einem ersten Aspekt der Erfindung wird ein Verfahren zum Auswerten von Daten, insbesondere zum Auswerten von Protokolldaten, die von einer oder mehreren Vorrichtungen zum Erfassen und Dokumentieren von Protokolldaten geliefert werden, bereitgestellt. Daten, die in den mehreren Vorrichtungen zum Erfassen und Dokumentieren von Protokolldaten gespeichert sind, werden bereigestellt und gespeichert. Die Bereitstellung kann mittels manueller Eingabe, Übertragung über eine Schnittstelle oder das Auslesen eines entfernbar gekoppelten Speicher-Moduls bzw. Mediums erfolgen. Bewertungskriterien werden aus den Daten abgeleitet und zumindest eine Auswahl daraus wird an eine weitere verarbeitende Vorrichtung übertragen. Ferner können zumindest ein Teil der gespeicherten Daten mit einem Teil der Bewertungskriterien kombiniert werden, um eine zu treffende Bewertungsaussage zu ermöglichen. Die Daten und/oder Bewertungskriterien können teilweise bzw. in kombinierter Form an eine weitere verarbeitende Vorrichtung übertragen werden.

Gemäß einer Ausführungsform der Erfindung werden die kombinierten Daten und Bewegungskriterien in einer Weise dargestellt, dass die Darstellung von der weiteren verarbeitenden Vorrichtung über eine Datenkommunikationsverbindung abgerufen werden kann. Gemäß einer anderen Ausführungsform der Erfindung werden Konfigurationsdaten an eine oder mehrere Vorrichtungen zum Erfassen und Dokumentieren von Protokolldaten übertragen. Gemäß einer weiteren Ausführungsform der Erfindung werden Daten empfangen, die in den Vorrichtungen zum Erfassen und Dokumentieren von Protokolldaten gespeichert sind. Die Daten schließen weitere positionsbezogene Daten ein, die ausgewertet werden, um die Kartendaten zu aktualisieren.

Gemäß einem ersten Aspekt der Erfindung wird ein System zum Erfassen und/oder Auswerten von Protokolldaten bereitgestellt. Das System schließt mindestens eine Vorrichtung zum Erfassen und Dokumentieren von Protokolldaten in Übereinstimmung mit einer der vorstehend beschriebenen Ausführungsformen der vorliegenden Erfindung und eine Vorrichtung zum Auswerten von Daten, insbesondere von Positions- und Protokolldaten, in Übereinstimmung mit einer der vorstehend beschriebenen Ausführungsformen der vorliegenden Erfindung ein.

Gemäß einem ersten Aspekt der Erfindung wird ein Verfahren zum Betreiben eines System zum Erfassen und/oder Auswerten von Protokolldaten, insbesondere des vorstehend genannten Systems, bereitgestellt. Das Verfahren setzt sich aus den Verfahrensoperationen eines Verfahrens zum Erfassen und Dokumentieren von Protokolldaten in Übereinstimmung mit einer der vorstehend beschriebenen Ausführungsformen der vorliegenden Erfindung und eines Verfahrens zum Auswerten von Daten, insbesondere von Positions- und Protokolldaten, in Übereinstimmung mit einem der vorstehend beschriebenen Ausführungsbeispiele der vorliegenden Erfindung zusammen.

Gemäß einem ersten Aspekt der Erfindung wird ein Computerprogramm-Produkt zum Erfassen und/oder Auswerten von Protokolldaten, insbesondere von Positions- und Protokolldaten, bereitgestellt. Das Computerprogramm-Produkt schließt ladbare Programmcodeabschnitte zur Ausführung der Verfahrensoperationen gemäß einem der Verfahren zum Auswerten und/oder Verfahren zum Betreiben ein, wenn das Computerprogramm auf einer mikroprozessor-basierenden Vorrichtung, einem Computer (PC, Notebook, Laptop etc.), einem Netzwerk-basierenden mikroprozessor-gesteuerter Vorrichtung, einem Terminal oder einem Kommunikationsterminal ausgeführt wird.

Gemäß einem ersten Aspekt der Erfindung wird ein Computerprogramm-Produkt zum Erfassen und/oder Auswerten von Protokolldaten, insbesondere von Positions- und Protokolldaten, bereitgestellt. Das Computerprogramm-Produkt schließt ein Computerprogramm mit Programmcodeabschnitte ein, die auf einem Computer-lesbaren Medium gespeichert sind, um Operationen gemäß einem der Verfahren zum Erfassen, Verfahren zum Auswerten und/oder Verfahren zum Betreiben auszuführen, wenn das Computerprogramm-Produkt auf einer mikroprozessor-basierenden Vorrichtung, einem Computer (PC, Notebook, Laptop etc.), einem Netzwerk-basierenden mikroprozessor-gesteuerter Vorrichtung, einem Terminal oder einem Kommunikationsterminal ausgeführt wird.

Gemäß einem ersten Aspekt der Erfindung wird ein Computer-Datensignal bereitgestellt, das in einer Trägerwelle enthalten ist und ein Programm darstellt, das, wenn es durch einen Mikroprozessor ausgeführt wird, ein Verfahren gemäß einem der Verfahren zum Erfassen, Verfahren zum Auswerten und/oder Verfahren zum Betreiben ausführt oder ausführen läßt.

Die vorstehend dargelegten und weitere Merkmale der vorliegenden Erfindung werden in der nachstehenden detaillierten Beschreibung ersichtlicher, wenn sie in Verbindung mit den beigefügten Zeichnungen erfasst werden, in denen:
- Fig. 1: eine schematische Darstellung eines erfindungsgemäßen Systems zum Überwachen einer Flugplatt-Kampagne in Übereinstimmung mit einer Ausführungsform zeigt;
- Fig. 2a: Komponenten eines QS-Moduls gemäß einer erfindungsgemäßen Ausführungsform darstellt;
- Fig. 2b: Komponenten eines QS-Servers gemäß einer erfindungsgemäßen Ausführungsform darstellt;
- Fig. 3: ein schematisches Flussdiagramm zeigt, das Operationen aufweist, die von einem QS-Modul gemäß einer erfindungsgemäßen Ausführungsform ausgeführt werden; und
- Fig. 4: ein schematisches Flussdiagramm zeigt, das Operationen aufweist, die von den Komponenten des Systems gemäß einer erfindungsgemäßen Ausführungsform ausgeführt werden.

Die Erfindung wird im folgenden in einem Zusammenhang mit der vorstehend beschriebenen Ausführungsanwendung konkretisiert, um die Verständlichkeit der zu beschreibenden Systeme, Vorrichtungen, Komponenten und Verfahren zu verbessern. Der Ausführung liegt zugrunde, den Erfolg einer Verteilung von Werbebroschüren, Flyern, Informationsmaterial etc. innerhalb eines definierten geographischen Bereichs zu überwachen, insbesondere in Bezug auf die Zuverlässigkeit bzw. Erfolg der Zustellung als auch den Zeitaufwand bzw. Effektivität der Maßnahme.

Es ist jedoch zu verstehen, dass die Erfindung nicht auf diese konkrete Ausfiihrungsanwendung beschränkt sein soll. So ist z.B. einfach zu erkennen, dass die beanspruchte Erfindung sich auf zahlreiche weitere alternative und verwandte Ausfiihrungsanwendung bezieht. Als eine der zahlreichen Alternativen ist z.B. denkbar, das zugrunde liegende Konzept der Erfindung zur Überwachung eines Wachschutzes zu verwenden, der innerhalb eines vorgegebenen geographischen Gebiets patrouilliert.

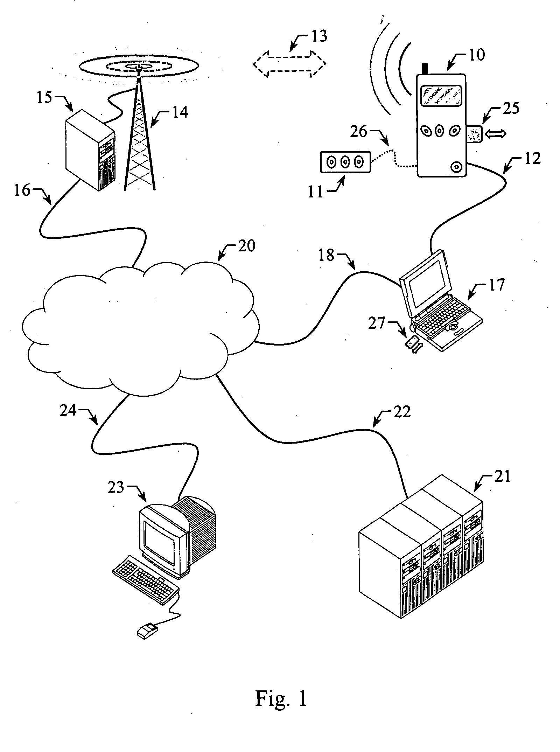

Fig. 1 repräsentiert eine schematische Darstellung eines erfindungsgemäßen Systems entsprechend des Beispiels zum Überwachen einer Flugplatt-Kampagne in Übereinstimmung mit einer Ausführungsform. Das System umfasst insbesondere eine Moduleinheit 10 und eine Zentraleinheit 21. Ferner schließt das System eine Nutzereinheit 23, eine Vermittlungseinheit 17, sowie eine Mobilfunkanbietereinheit 15 ein.

Die Moduleinheit 10 soll eine oder mehrere Moduleinheiten, die in dem System integriert sind, repräsentieren. Die Moduleinheit 10 wird von der zu überwachenden Person mit sich geführt. Die zu überwachende Person ist z.B. in Hinblick auf die vorangestellte Ausfiihrungsanwendung ein Verteiler von Wurfsendungen, dessen zurückgelegte Wegstrecke erfasst und dessen Tätigkeit protokolliert werden soll. Die Moduleinheit 10 ist daher bevorzugt eine mobile bzw. tragbar Moduleinheit 10, die von der Person in der Kleidung getragen wird, in einer von der Person getragenen oder mitgeführten Vorrichtung (Rucksack, Handtasche, Umhängetasche, Handkarren, Zweiradanhänger und dergleichen) integriert ist oder alternativ in/an dem von der Person benutzten Fahrzeug integriert/angebaut ist. Die Moduleinheit 10 ist vorzugsweise eine Mikroprozessor-basierende Vorrichtung, die eine oder mehrere entsprechende Programmkomponenten aufweist, um die erforderlichen Funktionen auszuführen.

Zur besseren Handhabung kann die Moduleinheit 10 eine Fernbedienung 11 aufweisen, so dass die Mobileinheit geschützt untergebracht werden kann, so dass die während des Betriebs notwendigen und erforderlichen Eingaben weiterhin mittels der Fernbedienung 11 getätigt werden können. Ferner können eine oder mehrere Fernbedienungen 11 an eine Moduleinheit 10 gekoppelt sein, so dass Eingaben, die durch die verschiedenen Fernbedienungen z.B. von verschiedenen Personen einer Gruppe getätigt werden, Wirkung auf eine gemeinsam genutzte Moduleinheit 10 (der Gruppe) erzielen. Die eine oder mehreren Fernbedienungen 11 sind über eine Signalverbindung mit der Moduleinheit 10 verbunden, die z.B. draht-basierend oder drahtlos ausgeführt sein kann. Für eine drahtlose Signalverbindung würden sich zum Beispiel eine Funkverbindung im ISM (industrial science medical) Band oder anderen lizenzfreien Funkbändern eignen. Wenn mehrere Fembedienungen 11 an eine Moduleinheit 10 gekoppelt sind, kann jede Fernbedienung 11 mit einer geeigneten Kennung versehen sein, um jede gekoppelte Fernbedienung identifizieren zu können.

Die Zentraleinheit 21 dient dazu, sowohl die eine Moduleinheit 10 oder gegebenenfalls die mehreren Moduleinheiten zu initialisieren als auch die von den Moduleinheiten erfassten Daten zu empfangen, auszuwerten, darzustellen und bereitzustellen, so dass ein Auftraggeber in der Lage ist, die Daten mittels einer ihm zur Verfügung stehenden Nutzereinheit 23 abzurufen. Die Zentraleinheit 21 ist vorzugsweise eine Servereinheit, eine netzwerk-basierende Mikroprozessorbetriebene Endbenutzervorrichtung (z.B. Server mit Netzwerkzügang), die eine oder mehrere entsprechende Programmkomponenten aufweist, um die erforderlichen Funktionen auszuführen.

Die Daten-Kommunikation zwischen der Moduleinheit 10 und der Zentraleinheit 21 kann über geeignete Daten-Kommunikationsverbindungen erfolgen. Als Beispiel sind in dem System in Fig. 1 zwei unterschiedliche Kommunikationspfade illustriert. Ein erster Kommunikationspfad setzt sich beispielsweise aus einer drahtlosen Datenverbindung 13, die die Mobileinheit 10 mit Funkzugriffsnetzwerk (radio access network, RAN) 14 eines zellularen Mobil-Kommunikationssystems verbindet, und einem Netzanbieter 15 zusammen, der eine Daten-Verbdienung 16 zu einem Weitverkehrsnetzwerk 20 (WAN), z.B. das Internet, herstellt, an das die Zentraleinheit 21 z.B. über eine drahtgebundene Datenverbindung gekoppelt ist. Ein alternativer Kommunikationspfad setzt sich beispielsweise aus einer lokalen Datenverbindung 12 zu einer Vermittlungseinheit 17 zusammen, die wiederum mittels einer Datenverbindung 18 an das Weitverkehrsnetzwerk 20 (WAN, Internet) gekoppelt ist, mit dem die Zentraleinheit 21 über die Datenverbindung 22 in Verbindung steht.

Die drahtlosen Datenverbindung zwischen Mobileinheit 10 und Funkzugriffsnetzwerk 14 eines zellularen Mobil-Kommunikationssystem kann eine Datenverbindung eines typischen Mobil-Kommunikationssystems, wie zum Beispiel eines Global System for Mobile Communication (GSM), Personal Communication System (PCS), Personal Communication Network (PCN), Universal Mobile Telecommunication System (UMTS) bzw. ähnlicher oder verwandter digitaler zellularer Funk-Kommunikationssysteme, sein.

Die lokale Datenverbindung 12 zu der Vermittlungseinheit 17 kann mittels einer lokalen drahtgebundenen als auch lokalen drahtlosen Datenverbindung realisiert werden. Alternativ ist es zum Beispiel ebenso möglich eine Daten-Kommunikationsverbindung zwischen der Mobileinheit 10 und der Vermittlungseinheit 17 über das Funkzugriffsnetzwerk (radio access network, RAN) 14 und der Datenverbindung 18 mit Hilfe des vermittelnden Weitverkehrsnetzwerks 20 zu etablieren.

Es soll bemerkt werden, dass die dargestellten Datenverbindungen 12, 16, 18, 22 und 24 mit Hilfe derzeit oder zukünftig verfiihrbarer Netzwerk- und/oder Datenkommunikations-Technologie realisiert werden können. Das heißt die Datenverbindungen 12, 16, 18, 22 und 24 können mittels drahtgebundener und/oder drahtloser Datenkommunikations-Technologie und/oder Kombinationen davon etabliert werden, wie zum Beispiel Telefon-Einwahlleitung, Telefon-Standleitung, Weitverkehrsnetzwerk (MAN: metropolitan area network; WAN: wide area network; Internet) lokales Netzwerk (LAN: local area network), drahtloses lokales Netzwerk (WLAN: wireless local area network; WLL: wireless local loop) mobiles drahtloses Netzwerk, Bluetooth, proprietäre serielle/parallele Datenverbindung (universeller serieller Bus (USB), Firewire Bus (IEEE 1394 konformer Bus) etc.), Bluetooth etc. Die Aufzählung der Techniken ist nicht als abschließend zu betrachten.

Unabhängig von der konkreten Ausbildung des genutzten Kommunikationspfads für die Datenkommunikation zwischen Zentraleinheit 21 und Moduleinheit 10 dient die Datenkommunikations-Fähigkeit dazu, uni-direktional Daten oder einen Teil der Daten, die von der Mobileinheit 10 erfasst werden, an die Zentraleinheit 21 zu übertragen und/oder bi-direktional Konfigurationsdaten an die Mobileinheit 10 für deren Vorbereitung zur Benutzung zu übertragen. Die dargestellte Übertragung über ein mobiles Datenkommunikations-Netzwerk kann die Übermittlung von Daten, Teile der Daten bzw. der Konfigurationsdaten während des Betriebs ermöglichen.

Die Daten werden von der Zentraleinheit 21 derart bearbeitet, dass ein Nutzer der Daten diese mittels der ihm verfügbaren Nutzereinheit 23 abrufen kann. Die Nutzereinheit 23 ist vorzugsweise eine Clienteinheit, die auf die von der Zentraleinheit 21 (Server) bereitgestellten Daten zugreift kann. Die Nutzereinheit 23 verfügt hierzu über einen Kommunikationspfad zu der Zentraleinheit 21, der beispielsweise über eine Datenverbindung 24 realisiert wird, die die Nutzereinheit 23 an das Weitverkehrsnetzwerk 20 (WAN, Internet) koppelt, mit dem ebenso die Zentraleinheit 21 über die Datenverbindung 22 verbunden ist.

Eine weitere Möglichkeit, die Daten der Mobileinheit der Zentraleinheit 21 bereitzustellen, kann auf entfernbar gekoppelten Datenträgern basieren. Das heißt, die Mobileinheit 10 ist mit einem Datenträger 25 ausgestattet, der von einer der weiteren dargestellten Einheiten 17 (hier als Datenträger 27 illustriert) bzw. 21 gelesen werden kann. Als ein entfernbar gekoppelter Datenträger 25 bzw. Datenträger 27 kommen zahlreiche verfügbaren und/oder zukünftigen Datenträger-Technologien in betracht. Für mobile elektronische Endvorrichtungen finden zum Beispiel entfernbar gekoppelte Speichermodule Anwendung, wie beispielsweise Chip-Katen-Module, Multimedia Memory Module (MMC), die Secure Digital Module (SD Card), Flash-Speicher-Module, USB-Speicher-Module, optische oder magnetische Auszeichnungsmedien, permanente Speicher-Module (ferritische und/oder magnetische RAM Speicher Module) und dergleichen. Die Aufzählung der Speichermodule ist nicht als abschließend zu betrachten.

Schließlich ist es ebenso im Rahmen des Konzepts der Erfindung, ein in der Moduleinheit 10 eingebautes Display für die Darstellung der Daten der Moduleinheit 10 zu einzusetzen, um ein manuelles Übertragen der Daten zu den weiteren Einheiten zu ermöglichen.

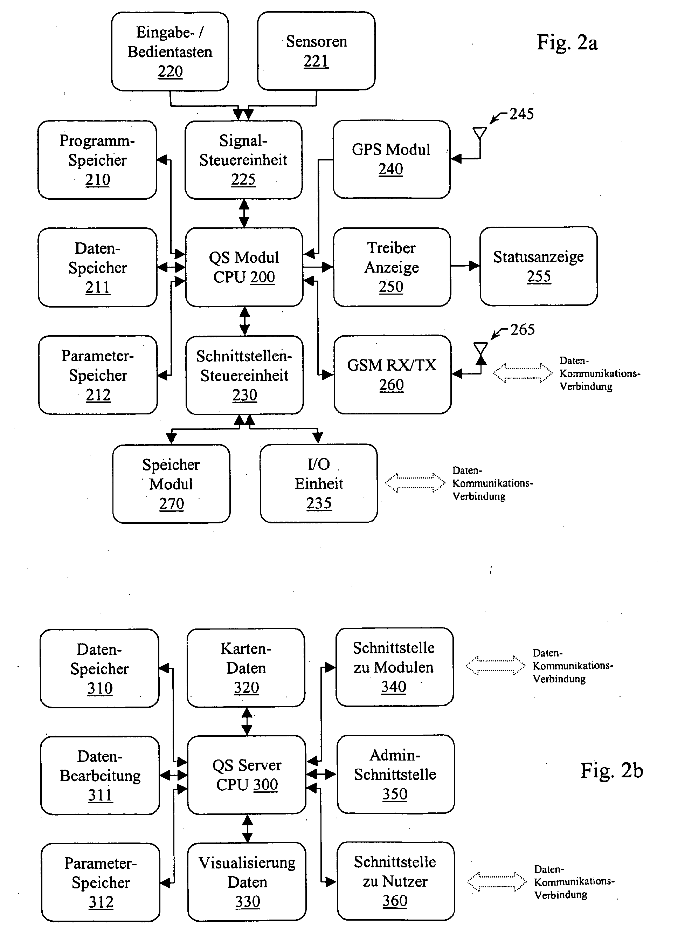

Der Überblick über das System, das in Fig. 1 beispielhaft ausgeführt ist, wird in den folgenden Fig. 2a und 2b um Ausführungsbeispiele der Moduleinheit 10 und der Zentraleinheit 21 ergänzt.

Fig. 2a stellt Komponenten eines QS-Moduls gemäß einer erfindungsgemäßen Ausführungsform dar, wie es in Fig. 1 als Moduleinheit 10 illustriert ist. Die Moduleinheit 10 bzw. das QS-Modul ist aus einer zentralen Mikroprozessoreinheit (CPU) 200 aufgebaut, an die weitere Komponenten gekoppelt sind und die für die Bearbeitung der Daten und die Steuerung des Moduls sorgen. An die zentrale Mikroprozessoreinheit (CPU) 200 sind Speichereinheiten, insbesondere ein Programmspeicher 210, ein Datenspeicher 211, ein Parameterspeicher 212, Ein-/Ausgabeeinheiten, insbesondere Eingabe-/Bedientasten 220 über eine Taststeuereinheit 225, I/O Einheit 235 über eine Schnittstellen-Steuereinheit 230 und Statusanzeige 255 über einen Anzeigetreiber 250, gekoppelt. Ferner ist ein GPS Modul 240 mit zugehöriger Antenneneinheit 245 und ein GSM Sende/Empfänger-Modul (RX/TX) 260 mit entsprechender Antenneneinheit 265 in dem QS-Modul integriert und mit der zentralen Mikroprozessoreinheit (CPU) 200 gekoppelt, um einen Datenaustausch zu ermöglichen. Das GSM Sende/Empfänger-Modul (RX/TX) 260 soll beispielhaft ein Kommunikationsmodul für eines der möglichen digitalen zellularen Kommunikationssysteme, die vorstehend beschrieben sind, darstellen und beschränkt das QS-Modul nicht auf eine konkrete Implementation eines GSM TX/RX Moduls.

Die Statusanzeige 225 dient dazu, Informationen bezüglich des Betriebsmodus, in dem sich das QS-Modul befinden kann, anzuzeigen. Die Eingabe- und Bedientasten gestatten es dem Benutzer des QS-Moduls Signale auszulösen, die sowohl auf die Funktion des QS-Moduls Einfluss nehmen also auch geeignet sind, Daten zu erzeugen. Ferner können Sensoren 221 in dem QS-Modul integriert sein, die geeignet sind, Sensorsignale auszugeben, die ebenfalls geeignet sind, auf die Funktion des QS-Moduls Einfluss zu nehmen, also auch Daten zu erzeugen. Die Eingabeund Bedientasten 220 können vorteilhafterweise frei konfigurierbar sein, so dass einer oder mehreren der bereitgestellten Tasten mittels der Signalsteuereinheit 225 jeweils Bedeutungen bzw. jeweils Signale für die Weiterverarbeitung zugeordnet sind. Im ersten Fall wird die Bedienung einer Taste bzw. das durch einen Sensor erzeugte Signal von dem QS-Modul entsprechend der zugeordneten Bedeutung protokolliert bzw. im letzteren Fall wird eine Funktion durch das erzeugte Signal aktiviert, das durch die Bedienung einer Taste ausgelöst wird bzw. von einem Sensor bereitgestellt wird. Die Sensoren 221 können zum Beispiel Bewegungssensoren, Funktransponder, Infrarotempfänger und der gleichen umfassen. Ein Bewegungssensor ermöglicht zum Beispiel, die Positionserfassung derart zu steuern, dass das GPS-Modul 240 bzw. die für die Positionserfassung relevante Komponente des QS-Moduls nur aktiviert ist, wenn sich das QS-Modul bewegt, um vorteilhafterweise Strom zu sparen. Die Steuerung durch einen Bewegungssensor könnte ferner auf eine Vielzahl an Komponenten des QS-Moduls ausgedehnt werden, indem das QS-Modul bei Stillstand in einen Bereitschaftsmodus versetzt wird bzw. deaktiviert wird und bei Bewegung in den Betriebsmodus zurückkehrt bzw. aktiviert wird. Weitere Sensoren wie Funktransponder, Infrarotempfänger etc. können die erforderliche manuelle Bedienung der Eingabe- und Bedientasten durch den Benutzer des QS-Moduls ersetzten. So kann zum Beispiel das Erreichen eines bestimmten Ortes durch den Empfang eines Signal mittels eines Sensors (Funktransponder, Infrarotempfänger) erkannt werden. Die aus der Bedienung der Eingabe- und Bedientasten 220 resultierenden Protokolldaten bzw. die aus Sensordaten generierten Protokolldaten können mit Zeitdaten ergänzt werden. Wenn erforderlich kann hierfür eine Uhrkomponente (nicht gezeigt) in dem QS-Modul implementiert werden.

Das GPS Modul 240 stellt eine Möglichkeit dar, Positionsdaten zu erfassen. Das GPS Modul ermittelt die geographische Position des QS-Moduls aus Signalen, die durch das zugehörige Antennensystem 245 empfangen werden. Zusätzlich zu der geographischen Position empfängt das GPS Modul ferner hoch Zeitdaten. Diese Daten werden für die weitere Bearbeitung der zentralen Mikroprozessoreinheit (CPU) 200 bereitgestellt. Das dargestellte GPS Modul 240 soll verstanden werden als eine Komponente, die in der Lage ist, eigenständig geographische Positionsdaten für die weitere Verarbeitung zu liefern. Neben dem bekannten Satellitengestützten Global Positioning System (GPS) des Amerikanischen Verteidigungsministeriums ist ein ähnliches System im Besitz der Russischen Föderation und die Europäische Union wird in den nächsten Jahren ebenfalls ein vergleichbares Satelliten-gestütztes System zur Positionsbestimmung auf der Erde bereitstellen. Eine weitere Alternative zu einem GPS Modul 240 ist durch digitale zellulare Kommunikationssysteme gegeben, die vergleichbare geographische Positionsdaten (location services) entweder an das in dem digitalen zellularen Kommunikationssystem teilnehmenden Funkkommunikationsmodul selbst oder einer anderen berechtigten Einheit (z.B. dem QS-Server bzw. der Zentraleinheit 21) liefern können. Diese Art der Positionsermittlung ist unter dem Begriff location based service (LCS) bekannt. Das heißt, das dargestellte GSM RX/TX Modul als auch das GPS Modul könnten durch ein integriertes Modul ersetzt werden, das sowohl geographische Positionsdaten als auch bi-direktionale Datenkommunikation bereitstellt. Zum Beispiel ließe sich entsprechendes durch ein integrierendes UMTS Modul umsetzten.

Das hier illustrierte QS-Modul weist sowohl das GSM RX/TX Modul 260 als auch eine I/O Schnittstelleneinheit 235, die eine wie vorstehend beschriebene lokale Schnittstelle zu der Vermittlungseinheit 17 bereitstellen kann. Die I/O Schnittstelleneinheit 235 und die I/O-Einheit 235 kann ferner eine uni-direktionale Schnittstelle zur Übertragung von Daten des QS-Modul bereitstellen.

Der entsprechende Programmspeicher 210 enthält Programmcode-Anweisungen, die von der zentralen Mikroprozessoreinheit (CPU) 200 ausgewertet und abgearbeitet werden, um den erfindungsgemäßen Betrieb des QS-Moduls bzw. die erfindungsgemäße Steuerung der Komponenten in dem QS-Modul zu ermöglichen. Alternativ kann der erfindungsgemäße Betrieb des QS-Moduls ebenso durch eine festverdrahtete Logikschaltung oder äquivalenter elektronischer Schaltungen ermöglicht werden.

Ferner ist der Datenspeicher 221 dafür vorgesehen die in dem QS-Modul anfallenden Daten zu speichern. Hierbei ist zu verstehen, dass die anfallenden Daten Protokolldaten betreffend eine Betätigung der Eingabe- und Bedientasten durch einen Benutzer, Zeitdaten, und/oder Positionsdaten umfassen können. Ferner soll bemerkt werden, dass die anfallenden Daten ebenfalls resultierende Daten einer Bearbeitung, Verarbeitung und/oder Vorbearbeitung der in dem QS-Modul verfügbaren Daten sein können.

Der Datenspeicher 211 kann als ein Stapelspeicher oder als ein Ringspeicher ausgelegt sein, wobei letzterer sicher stellt, dass kein Überlaufen des Datenspeichers 211 auftreten kann. In Ringspeichem werden automatisch die Daten mit dem ältesten Zeitrang durch aktuelle zu speichernde Daten überschrieben, wenn kein freier Speicherbereich mehr zur Verfügung steht. Ringspeicher gewährleisten somit, dass die gespeicherten Daten, jene Daten sind, die den jüngst möglichen Zeitrang aufweisen.

Der Parameterspeicher 212 erlaubt Konfigurationsdaten für den Betrieb des QS-Moduls bzw. der Komponenten des QS-Moduls zu speichern. Die Konfigurationsdaten umfassen insbesondere Parameter, die das Verhalten des QS-Moduls bzw. der einzelnen Komponenten steuern, bestimmen und/oder konfigurieren.

Alternativ kann der Datenspeicher 210 bzw. die Speicher 210, 211 und/oder 212 als ein entfernbar gekoppeltes Speicher-Modul 270 realisiert sein, wie in Fig. 1 illustriert, das vorzugsweise über eine Schnittstellen-Steuereinheit 230 mittels eines Datenbusses angesteuert wird.

Im Hinblick auf ein Ausführungsbeispiel eines mobilen QS-Moduls erfolgt die Versorgung des QS-Module mittels eines oder mehreren Akkumulatoren bzw. einer oder mehreren Batterien (nicht in Fig. 2a dargestellt). Hierbei ist der Stromverbrauch eine entscheidende Größe, um einen effektiven Einsatz des QS-Moduls zu gewährleisten. In diesem Zusammenhang ist ein selektiver Betrieb einzelner Komponenten vorteilhaft, das heißt, dass zum Beispiel das eventuell integrierte GSM TX/RX Modul 260 nur zeitweise mit Strom versorgt wird, so dass Strom gespart wird. Die zeitweise Inbetriebnahme von einer oder mehreren Komponenten des QS-Moduls kann durch entsprechende Konfigurationsdaten (Parameter) vorbestimmt festgelegt werden, so dass ein entsprechendes Signal auf ein oder mehrere Ereignisse hin, den Betrieb der einen oder der mehreren Komponenten steuert, die selektiv betrieben werden.

Die Datenübertragung mittels öffentlicher digitaler Kommunikationssysteme (Mobilfunksysteme) ist kostenpflichtig. Um die Betriebskosten für ein QS-Modul, das von dieser Funktionalität Gebrauch macht, möglichst gering zu halten, ist es von Vorteil, zum einen die zu übertragende Datenmenge möglichst gering zu halten, indem nur z.B. ein Teil der Daten (ausgewählt bzw. erforderlich) übertragen wird, resultierende Ergebnisse einer Auswertung der Daten übertragen werden, und/oder die zu übertragenden Daten komprimiert werden. Geeignete Kompressionsalgorithmen sind allgemein verfiigbar. Ferner ist die Wahl des Datenübertragungsdienstes ein weiterer zu berücksichtigender Gesichtspunkt. Im Rahmen von auf GSM basierenden Kommunikationssystemen bietet sich zum Beispiel die Verwendung des Short Message Services (SMS) oder weiterentwickelter Nachrichtenübermittlungsdienste (z.B. Multimedia Message Service (MMS)) an. Mobilfunksysteme jeglicher Art bieten darüber hinaus zahlreiche weitere Verfahren an, um Daten mittels eines Datenübertragungsdienstes zwischen dem Mobilfunk-Modul und einer an das Internet gekoppelten Mikroprozessor-basierenden Vorrichtung auszutauschen. So kann zum Beispiel eine dezidierte Punkt-zu-Punkt Datenverbindung aufgebaut werden.

Die vorstehend beschriebene Datenübertragung kann durch ein Datenpaket-orientiertes Übertragungsverfahren wie zum Beispiel den Datenpaket-Funkdienst (GPRS: General Paket Radio Service) erfolgen, der in heutigen GSM-basierenden Netzen implementiert ist. Bei Verwendung der Datenpaket-Funkdienst-Funktionalität eines Kommunikationsmoduls (GSM TX/RX Modul 260) für ein digitales zellulares Kommunikationssystem kann eine Datenspeicherung, wie sie im Zusammenhang mit dem vorstehend beschriebenen Datenspeichers 210 durchgeführt wird, entfallen, indem die zu speichernden Daten praktisch unmittelbar mit der Erfassung an die Zentraleinheit 21 bzw. den QS-Server übermittelt werden. Der illustrierte Datenspeicher 210 dient bei einer unmittelbaren Übertragung der erfassten Daten vielmehr als ein Pufferspeicher für das Kommunikationsmodul (GSM TX/RX Modul 260), wobei ein derartiger Pufferspeicher ebenfalls in dem Kommunikationsmodul selbst integriert sein kann.

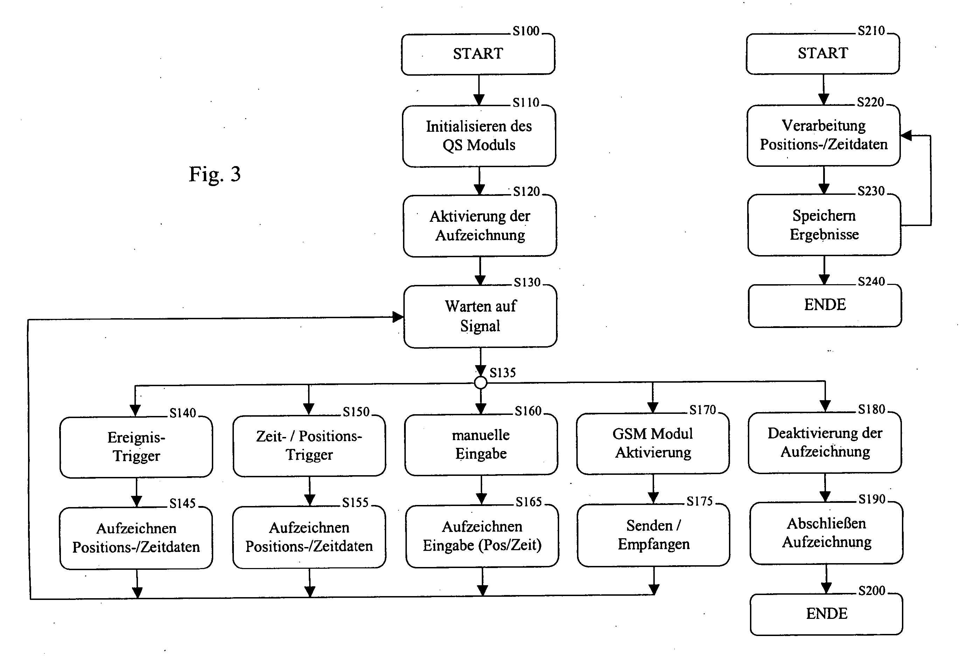

Das Zusammenwirken der einzelnen Komponenten, zum Beispiel in Übereinstimmung mit dem in Fig. 2a dargestellten Ausführungsbeispiel, gesteuert durch die zentrale Mikroprozessoreinheit (CPU) 200 wird nachstehend unter Bezug auf das Flussdiagramm in Fig. 3 genauer erläutert.

Fig. 2b stellt Komponenten eines QS-Servers gemäß einer erfindungsgemäßen Ausführungsform dar, wie es in Fig. 1 als Zentraleinheit 21 illustriert ist. Wie vorstehend erwähnt erfüllt der QS-Server insbesondere die Funktion ein oder eine Vielzahl an QS-Modulen zu initialisieren bzw. zu konfigurieren als auch die erfassten Daten, d.h. die Positions- und Zeitdaten als auch Protokolldaten, vorausgewertete Daten und weitere manuelle durch den Benutzer eingegebene Daten, zu speichern und/oder zu verarbeiten, so dass die Daten in einer geeigneten Form und Darstellung dem Nutzer des Systems an seiner Nutzereinheit 23 bereitgestellt werden können.

Hierzu umfasst der QS-Server in dem Ausführungsbeispiel eine Schnittstelle 340 zu dem QS-Modul bzw. zu den QS-Modulen, eine Schnittstelle 360 für die zugreifende Nutzereinheit 23 sowie einen Datenspeicher 310, der Daten von einem oder mehreren QS-Modulen speichert, ein Parameterspeicher 312 für das eine oder die mehreren QS-Module, der unter anderem Konfigurationsdaten bzw. -Parameter umfasst und eine Komponente 311 für die Datenbearbeitung. Ferner ist eine Komponente 330 für die Visualisierung der Daten und eine Komponente 320, die Kartendaten bereitstellt, in dem erfindungsgemäßen Ausführungsbeispiel des QS-Servers von Fig. 2b illustriert. Eine Administrator-Schnittstelle 350 dient zur Steuerung des QS-Servers. Die Schnittstelle 350 kann zum Beispiel direkt durch ein Display und Eingabemittel (Tastatur, Maus) dargestellt werden oder kann eine Schnittstelle 350 sein, die es ermöglicht, die Eingaben mittels einer Femsteuereinheit (Desktop Computer (PC) bzw. Mikroprozessor-basierende Einheit) einzugeben und die Ausgaben auf der Fernsteuereinheit darzustellen. Die Steuerung des QS-Servers umfasst die Vorbereitung des Servers für den Einsatz von QS-Modulen, unter anderem die Definition von Konfigurationsdaten betreffend des QS-Servers als auch des einen oder der mehreren eingesetzten Module, eventuell die Steuerung der Module während des Betriebs (Parametrisierung der QS-Module), die Datenkommunikation mit den QS-Modulen, die Definition der Bearbeitung/Visualisierung der erfassten Daten also auch die Kontrolle über den Zugriff auf die Daten des QS-Servers durch einen Nutzer.

Die Schnittstelle 340 und die Schnittstelle 360, die der Datenkommunikation mit dem einen oder den mehreren QS-Modulen und der Nutzereinheit dienen, können als eine Schnittstelle ausgebildet sein, entsprechend des Ausführungsbeispiels von Fig. 1, in dem die Daten von der Moduleinheit 10 (dem QS-Modul) bzw. zu der Nutzereinheit 23 über ein Weitverkehrsnetzwerk (WAN, Internet) geleitet wird, an das die Zentraleinheit (der QS-Server) gekoppelt ist. In diesem Sinne kommt für die kombinierte Schnittstelle ein herkömmliches Modem (analog, digital) oder eine herkömmliche Netzwerk-Schnittstelle (LAN-Karte) infrage.

Die Komponente 330 für die Visualisierung der Daten kann zum Beispiel in der Lage sein, die erfassten Daten in Kombination mit den aus den Daten resultierenden Auswertungsergebnissen graphisch derart darzustellen, so dass der Nutzer des Systems kognitiv einfach auf die geforderten und gewünschten Informationen schließen kann. Die Kartendaten-Komponente 320 ergänzt das System ferner zum Beispiel mit Kartedaten, wie zum Beispiel einem Stadtplan oder Teilen eines Stadtplans, in dem/denen die erfassten Daten und resultierenden Auswertungsergebnisse eingeblendet werden können. Bei der Visualisierung der Daten können im weiteren die Konfigurationsdaten berücksichtigt werden.

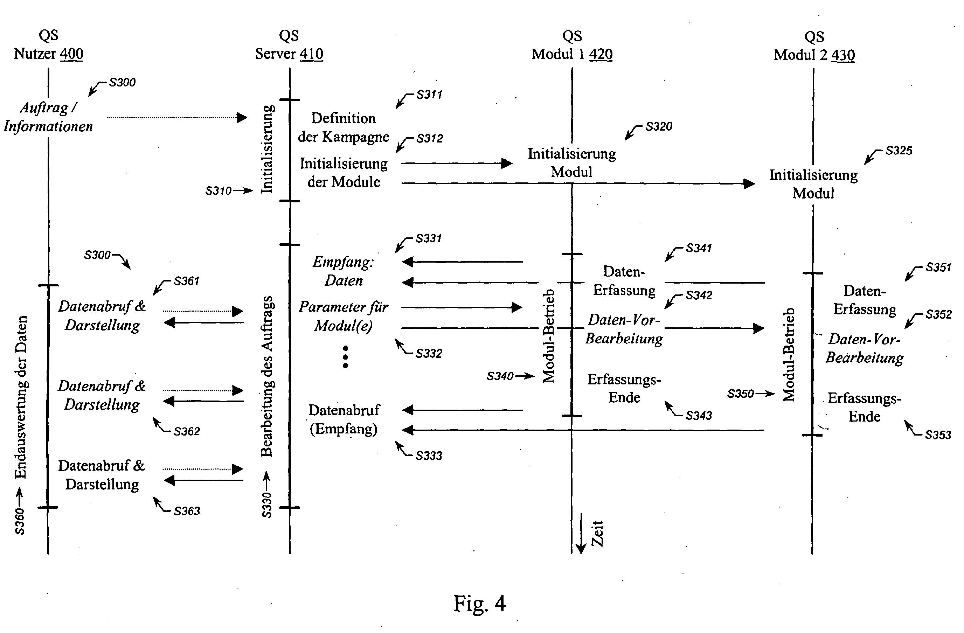

Eine detaillierte Beschreibung der möglichen Visualisierung und der Interaktion des QS-Servers mit den beteiligten Einheiten wird in Zusammenhang mit dem Flussdiagramm in Fig. 4 dargelegt.

Nicht im Detail dargestellt, aber dennoch in dem System von Fig. 1 erhalten, sind die Vermittlungseinheit 17 und die Nutzereinheit 23.

Die Vermittlungseinheit 17 hat die Aufgabe, eine uni-direktionale oder bi-direktionale Datenverbindung zwischen der Moduleinheit 10 (dem QS-Modul) und der Zentraleinheit 21 (dem QS-Server) zu vermitteln. Hierzu weist die Vermittlungseinheit 17, zum Beispiel ein Desktop Computer (PC), ein tragbarer Computer, eine Mikroprozessor-basierende Einheit etc., sowohl eine geeignete Schnittstelle zu dem QS-Modul also auch eine geeignete Schnittstelle zu dem QS-Server auf. Entsprechend dem in Fig. 1 dargestellten Ausführungsbeispiel umfasst die Vermittlungseinheit 17 eine drahtgebundene oder drahtlose lokale Schnittstelle der in Zusammenhang mit der Datenverbindung 12 vorstehend beschriebenen Art auf. Insbesondere sind hierfür lokale Schnittstellen wie eine proprietäre serielle Schnittstelle (uni-direktional oder bi-direktional), ein Universal Serial Bus, ein Firewire Bus, eine WLAN Schnittstelle, eine Bluetooth Schnittstelle aber auch weitere in heutigen Computern eingesetzte Schnittstellen zu nennen, die für die bi-direktionale Datenkommunikation geeignet sind. Die Schnittstelle zu dem QS-Server kann vorteilhafterweise eine herkömmliche Netzwerkschnittstelle wie zum Beispiel ein Modem (analog, digital), das mittels eines Netzwerkzugangs-Anbieters Zugriff auf ein lokales Netzwerk oder ein Weitverkehrsnetzwerk (WAN, Internet) ermöglicht, eine Netzwerkschnittstelle zu einem lokalen Netzwerk, das über einen Router an ein Weitverkehrsnetzwerk oder ein weiteres lokales Netzwerk gekoppelt ist oder eine Schnittstelle basierend auf verwandter oder ähnlichen Technologien sein. Eine Komponente in der Vermittlungseinheit sorgt für die Vermittlung bzw. Umsetzung der Daten, die zwischen dem QS-Server und dem QS-Modul ausgetauscht werden. Entsprechend den eingesetzten Schnittstellen, setzt die vermittelnde Komponente die Signale, die die Kommunikatiönsdaten auf den jeweiligen Übertragungsmedien repräsentieren, logisch und/oder physikalisch um. Ferner kann die Vermittlungseinheit einen Datenspeicher umfassen, der die zu kommunizierenden Daten temporär oder dauerhaft zwischenspeichert.

Die Nutzereinheit 23 wird von dem Nutzer eingesetzt, um die von dem QS-Server gespeicherten Daten, die die erfassten Daten und die Auswertungsergebnisse umfassen, abzurufen und darzustellen. Hierfür ist in der Nutzereinheit 23 eine Schnittstelle zu dem QS-Server implementiert, die im wesentlichen analog der Schnittstelle des QS-Servers zu der Nutzereinheit ausgebildet sein kann. Die Nutzereinheit 23 kann vorteilhafterweise ein Desktop Computer (PC), ein tragbarer Computer, eine Mikroprozessor-basierende Endbenutzervorrichtung etc. sein. Ferner kann es vorteilhaft sein, die Datenvisualisierung auf der Zentraleinheit 21 möglichst unabhängig von der Nutzereinheit 23 selbst zu gestalten, um einer Vielzahl von unterschiedlichen Nutzereinheiten den Zugriff auf die Daten und/oder deren geeignete Darstellung zu ermöglichen. Im Bereich des Internet hat sich hierfür die WEB-Technologie durchgesetzt, die auf systemtunabhängigen Beschreibungssprachen wie hypertext mark-up language (HTML), extended mark-up language (XML), cascaded style sheets (CSS), Java Applets, Java, Microsoft's .Net-Technologie und dergleichen aufsetzen. Der QS-Server kodiert die zu übermittelnden und/oder darzustellenden Daten in einer entsprechenden Sprache, die von dem auf der Nutzereinheit 23 betriebenen Browser entsprechend dargestellt werden. Alternativ kann eine proprietäre Datenzugriffs- und Darstellungskomponente eingesetzt werden. Die Darstellungskomponente kann ferner alternativ Teil der Nutzereinheit 23 sein, so dass die von der Zentraleinheit 21 verfügbaren Daten von der Nutzereinheit bezogen und dort dargestellt werden. Die Komponente für die Visualisierung der Daten kann analog zu der Komponente 330 der QS-Servers ausgeführt sein. Die erfassten Daten werden in Kombination mit den aus den Daten resultierenden Auswertungsergebnissen graphisch derart dargestellt, dass der Nutzer der Nutzereinheit 23 kognitiv einfach auf die geforderten und gewünschten Informationen schließen kann. Eine weitere analoge Kartendaten-Komponente ergänzt zum Beispiel ferner der Nutzereinheit 23 mit Kartendaten wie zum Beispiel einem Stadtplan oder Teilen eines Stadtplans, in dem/denen die erfassten Daten und resultierenden Auswertungsergebnisse eingeblendet werden können. Bei der Visualisierung der Daten können im weiteren die Konfigurationsdaten berücksichtigt werden.

Es soll im Zusammenhang mit den eingeführten Einheiten verstanden werden, dass die in Fig. 1 präsentierte Ausführungsform der Einheiten exemplarisch ist. Es ist zum Beispiel möglich, dass die in Fig. 1 illustrierten Einheiten, die in den vorstehenden Absätzen detaillierter ausgeführt sind, integrierte Einheiten sind. Das heißt, es ist zum Beispiel möglich, dass die Zentraleinheit 21 und die Nutzereinheit 23 integriert als eine Einheit realisiert sind. Ferner ist ebenso einen Integration von Zentraleinheit 21 und Vermittlungseinheit 17 möglich. Gleiche oder ähnliche Komponenten der vorstehend ausgeführten Einheiten sind in den integrierten Einheiten entsprechend nur einfach ausgeführt; illustrierte Datenverbindungen und Schnittstellen sind ferner obsolet.

Fig. 3 illustriert ein schematisches Flussdiagramm eines Verfahrens, das von einem QS-Modul gemäß einer erfindungsgemäßen Ausführungsform ausgeführt werden.

In einer Operation S100 startet das Verfahren gemäß eines Ausführungsbeispiels der vorliegenden Erfindung.

In einer Operation S110 kann das QS-Modul initialisiert werden. Die Initialisierung umfasst die Definition der für den Betrieb des QS-Moduls erforderlichen Konfigurationsdaten. Das entsprechende zugrundeliegende QS-Modul gemäß eines Ausführungsbeispiels soll dem in Fig. 2a beispielhaft dargestellten QS-Modul werden. Die Initialisierung kann von dem QS-Server aus erfolgen, d.h. entsprechende Konfigurationsdaten können von diesem an das QS-Modul übertragen werden (siehe hierzu Fig. 4).

Die Konfigurationsdaten umfassen eine Vielzahl an Einzeldaten bzw. Konfigurationsparametem. In Übereinstimmung mit dem vorstehend eingeführten Anwendungsbeispiel einer Werbebroschüren-Verteilung sind z.B. können folgende Parameter von Interesse sein:

Definition der Anfangs- und Endzeit innerhalb deren die Verteilung der Werbebroschüren zu erfolgen hat oder erfolgen soll. Ferner wird ein geographisches Gebiet bzw. werden mehrere geographische Gebiete festgelegt, innerhalb derer sich der Verteiler, der das QS-Modul mit sich führt, bewegen soll. Die geographischen Gebiete können, müssen aber nicht notwendigerweise, aneinander angrenzend sein. Eine Definition von geographischen Fixpunkten kann von Vorteil sein, wenn diese von dem Verteiler zu passieren sind, so dass das QS-Modul bei Erreichen solcher geographischen Fixpunkte definitionsgemäß agieren kann. Dem QS-Modul kann ferner eine eindeutige Kennung zugeordnet werden, die es erlaubt das QS-Modul eindeutig zu identifizieren. Diese Identifikationskennung kann aber ebenso permanent in dem QS-Modul gespeichert sein.

Die Erfassung der geographischen Positionsdaten und der zugehörigen Zeitdaten (Datum und/oder Uhrzeit) während des Betriebs kann detailliert vorgegeben werden. So kann z.B. festgelegt werden, dass die geographischen Positionsdaten und die zugehörigen Zeitdaten in vorbestimmten Zeitintervallen (z.B. äquidistante oder geschwindigkeitsabhängigen Zeitschritte) oder in räumlichen Abstandsintervallen (z.B. räumlich äquidistante oder geschwindigkeitsabhängigen Abstände) aufgezeichnet werden. Ersteres kann als ein zeitliches Triggern letzteres als ein räumliches Triggern der Positionsdatenaufzeichnung bezeichnet werden, Ferner eine Definition der Erfassung der Positions- und der zugehörigen Zeitdaten in Zusammenhang mit Eingangssignalen und/oder logischen Signalen (z.B. bei Übereinstimmen der Positionsdaten mit einem oder mehreren Sollwerten) möglich.

In Zusammenhang mit einem GSM Modul oder einem vergleichbaren Modul für drahtlose mobile Datenkommunikation können ferner zum Beispiel die Datenübertragungsintervalle, die Aktivierungsintervalle zum Überprüfen auf eingehende Nachrichten und die Verfahrensweise bei Vorliegen von Warninformationen festgelegt werden. Die Datenübertragungsintervalle legen fest ob oder in welchen zeitlichen Intervallen die von dem QS-Modul in dem Datenspeicher gespeicherten Daten an den QS-Server zu übertragen sind. Alternativ kann die Datenübertragung initiiert werden, falls ein Überlaufen des Datenspeichers in dem QS-Modul droht, um einen Datenverlust zu verhindern. Die Aktivierungsintervalle betreffen die Möglichkeit des GSM Moduls oder des vergleichbaren Moduls Daten zu empfangen. Diese Daten können ein oder mehrere Parameter bzw. Teilmengen der Konfigurationsdaten als auch Instruktionen bzw. Signale umfassen. Eine Definition der Aktivierungsintervalle stellt sicher, dass die zu empfangenden Daten spätestens zu den festgelegten Zeitpunkten empfangen werden. Der Datenempfang ermöglicht zum Beispiel die gänzliche oder teilweise Umkonfiguration des zuvor konfigurierten/initialisierten QS-Moduls während des Betriebs (Ändern der Datenübertragungsintervalle, des/der geographischen Gebiets/Gebiete etc.). Die Warninformationen können die Aktivierung bzw. das Abschließen der Aufzeichnung, das Überschreiten einer geographischen Gebietsgrenze, erreichen/passieren eines geographischen Fixpunktes, die Eingabe einer Signals mit Hilfe der Eingabe- und Bedientasten, das Überschreiten eines Zeitlimits (z.B. der Anfangszeit, wenn sich das QS-Modul nicht im festgelegten geographischen Gebiet befindet) und dergleichen betreffen. Die Definition der Betriebsbedingungen trägt einem Akkumulator oder Batteriebetrieb des QS-Moduls Rechnung.

Die Eingabe- und Bedientasten, die von dem QS-Modul für die Eingabe von Signalen und Instruktionen durch den Benutzer vorgesehen sind, können frei definierbare Tasten sein. Das heißt, den Eingabe- und Bedientasten kann jeweils eine beliebige Bedeutung und/oder eine frei definierbare Aktion, die durch die Betätigung der entsprechenden Taste ausgelöst wird, zugewiesen werden. Diese Zuweisungen können Teil der Konfigurationsdaten sein.

Nach abschließender Initialisierung des QS-Moduls ist das QS-Modul betriebsbereit und der erfindungsgemäße Betrieb des QS-Moduls kann erfolgen.

In einer Operation S120 wird die Datenaufzeichnung des QS-Moduls gestartet. Der Start erfolgt gemäß einer Bedingung, die z.B. in den Konfigurationsdaten festgelegt ist. Zum Beispiel wird die Aufzeichnung zu der vereinbarten Anfangszeit aktiviert bzw. bei Eintritt des QS-Moduls in ein definiertes geographisches Gebiet. Alternativ kann die Aktivierung durch ein manuelles Einschalten bzw. durch manuelle Bedienung einer entsprengenden Taste erfolgen bzw. angezeigt werden. Die Aktivierung kann, wenn gewünscht, mittels einer Nachrichtenübertragung via des GSM RX/TX Moduls dem QS-Server angezeigt werden. Ferner kann die Aktivierung durch ein Signal eines Sensor bewirkt werden. Vorstehend ist z.B. für die Aktivierung des QS-Moduls ein Bewegungssensor beschrieben.

In einer Operation S130 wartet das QS-Modul auf ein Signal, wobei das Signal als ein Ereignis zu interpretieren ist, das eine der folgenden Operationen des QS-Moduls gemäß eines Ausführungsbeispiels der Erfindung auslöst. Das Flussdiagramm verzweigt entsprechend Signal in einer Operation S135 zu den jeweiligen folgenden verschiedenen Operationen. In dem dargestellten Ausführungsbeispiel sind fünf Verzweigungen dargestellt, ohne dass das erfindungsgemäße Verfahren auf die dargestellten Verzweigungen begrenzt sein soll.

In einer Operation S140 liegt ein Signal vor, das als Ereignis-Trigger bezeichnet werden soll. Ein Ereignis-Trigger liegt vor, wenn, nicht limitierend, ein zuvor definierter geographischer Fixpunkt erreicht wird, eine zuvor definierte geographische Gebietsgrenze überschritten wird (d.h. ein geographisches Gebiet betreten wird bzw. ein geographisches Gebiet verlassen wird) oder ein zuvor definierter Zeitpunkt erreicht wird (d.h. zum Beispiel die zuvor definierte Anfangszeit bzw. Endzeit erreicht wird). In diesen Fällen wird der Ereignis-Trigger ausgelöst und in einer folgenden Operation S145 die Positions- und die Zeitdaten eventuell in Kombination mit Protokolldaten, die das entsprechende auslösende Signal beschreibt, aufgezeichnet, d.h. die Daten werden in dem Datenspeicher abgelegt.

Des weiteren kann bei Vorliegen eines Ereignis-Triggers folgend ein weiteres Ereignis ausgelöst werden. Hierbei ist vor allem eine Aktivierung des GSM RX/TX Moduls zu nennen, so dass bei Vorliegen eines Ereignis-Triggers zusätzlich zu der Aufzeichnung in der Operation S145 eine Nachricht über die Datenverbindung des GSM RX/TX Moduls an den QS-Server gesendet werden kann, die das auslösende Ereignis beschreibt um dieses dort verarbeiten zu können.

Zum Beispiel kann die Aktivierung des QS-Moduls, das Betreten bzw. Verlassen eines definierten geographischen Gebiets, das Passieren eines geographischen Fixpunkts, der Beginn der Aufzeichnung von Positions- und Zeitdaten etc. dem QS-Server auf diese Weise angezeigt werden.

In einer Operation S150 liegt ein Signal vor, das als Zeit-/Positions-Trigger bezeichnet wird. Wie vorsehend dargelegt, kann die Aufzeichnung der Positions- und Zeitdaten sowohl zeitlich getriggert (definiert durch vorbestimmte Zeitintervalle) als auch räumlich getriggert (definiert durch vorbestimmte räumliche Abstandsintervalle) werden. Bei vorliegen eines solchen Zeit-/Positions-Triggers werden in einer Operation S155 die Positions- und Zeitdaten in dem Datenspeicher aufgezeichnet.

In einer Operation S160 liegt ein Signal vor, das anzeigt, dass der Benutzer eine manuelle Eingabe mittels der Eingabe- und Bedientasten getätigt hat. Das vorliegende Signal oder ein begleitendes Signal codiert die von dem Nutzer getätigte Eingabe, so dass in einer folgenden Operation S165 Protokolldaten entsprechend der Eingabe durch den Benutzer eventuell in Kombination mit Positions- und Zeitdaten in dem Datenspeicher aufgezeichnet werden. Die Protokolldaten betreffend der Eingabe können das auslösenden bzw. begleitenden Signal sein oder aus diesem in Übereinstimmung mit einer zugewiesenen Bedeutung abgeleitet werden.

Den Eingabe- und Bedientasten des QS-Modules, die von dem Benutzer manuell zu betätigen sind, können verschiedene Bedeutungen zugewiesen werden. Die Zuweisung der jeweiligen Bedeutung kann Teil der Konfigurationsdaten sein. Zum Beispiel ist es im Zusammenhang mit der Verteilung von Informationsmaterial während einer Kampagne möglich, den Zustellungserfolg und bei nicht erfolgter Zustellung den Grund dafür zu protokollieren, um diese Protokolldaten für eine später folgende Kampagne verfügbar zu haben, so dass eine Abschätzung des Erfolgs der Kampagne vorgenommen werden kann. Es ist zum Beispiel möglich, drei Tasten jeweils folgende Bedeutung zuzuordnen:
- Taste 1:: Zustellung erfolgreich;
- Taste 2:: Zustellung nicht erfolgreich, z.B. wegen eines aggressiven Hundes, der die Zustellung verhindert, da kein Briefkasten vorhanden/zugänglich ist, etc.; und
- Taste 3:: keine Wurfsendung bzw. Werbung erwünscht, z.B. da der Briefkasten eine entsprechende Markierung trägt, da der Besitzer des Briefkasten in der Robinson-Liste eingetragen ist etc.

Diese vorstehend genannten beispielhaften Zuweisungen von Bedeutungen an die Eingabe- und Bedientasten kann dazu dienen, die Qualität der Kampagne zu beurteilen und die Anzahl der Zustellversuche bzw. die Anzahl der erfolgreichen Zustellungen im Vergleich mit der Anzahl der Zustellversuche zu bewerten. Die Protokolldaten können zum Beispiel die Bedienanzahl der Taste 1, 2 und 3 und/oder die Bedienung der jeweiligen Tasten 1 2 oder 3 in Verbindung mit zugeordneten Positions- und/oder Zeitdaten erfassen.

Die Operation S160 ist vorstehend in Zusammenhang mit Eingaben durch den Benutzer mittels der Eingabe- und Bedientasten erläutert worden. Alternativ kann die manuelle Eingabe durch den Benutzer durch Erfassen von Sensorsignalen durch Sensoren ergänzt bzw. ersetzt werden, die dem QS-Modul bereitgestellt sind. Die von den Sensoren gelieferten Sensorsignale können analog in Protokolldaten umgesetzt werden, indem den Sensorsignalen Bedeutungen zugewiesen sind bzw. die aus den Sensorsignalen abgeleitet werden. So ermöglicht zum Beispiel ein Funktransponder bzw. ein Infrarotempfänger die drahtlose Erfassung von Kennsignalen, die geeignet sind, entsprechend umgesetzt zu werden.

Des weiteren kann bei Vorliegen eines Eingabe-Signals folgend ein weiteres Ereignis ausgelöst werden. Hierbei ist vor allem eine Aktivierung des GSM RX/TX Moduls zu nennen, so dass bei Vorliegen eines Eingabe-Signals zusätzlich zu der Aufzeichnung in der Operation S165 eine Nachricht über die Datenverbindung des GSM RX/TX Moduls an den QS-Server gesendet werden kann, um das entsprechende auslösende Eingabe-Signal dort verarbeiten zu können.

Die Eingabe könnte zum Beispiel den Abbruch des Betriebs des QS-Moduls bzw. den Abbruch der Tätigkeit des Nutzers betreffen, was für die Protokollierung in dem QS-Server von Interesse sein könnte.

In einer Operation S170 liegt ein Signal vor, das anzeigt, das GSM RX/TX Modul zu aktivieren um Daten an den QS-Server zu übertragen und/oder Daten von dem QS-Server zu empfangen. Das entsprechende Signal wird zum Beispiel durch die vorstehend definierten Datenübertragungsintervalle und/oder die Aktivierungsintervalle gesteuert. Ferner kann das Signal durch einen drohenden Überlauf des Datenspeichers ausgelöst werden.

In einer Operation S175 werden entsprechend des Signals zumindest Teile der Daten aus dem Datenspeicher ausgelesen, für die Übertragung in Übereinstimmung mit dem verwendeten Datenkommunikationsdienst vorbereitet und versendet. Die zu sendenden Daten können Positions- und Zeitdaten, Protokolldaten, die aus manuellen Eingaben des Nutzers codiert/abgeleitet worden sind, Warninformationen, vor-verarbeitete Resultate (vergleiche nachstehend beschriebene Operationen S220, S230) etc. umfassen.

In einer Operation S175 werden entsprechend des Signals alternativ Daten (Nachrichten) durch das GSM RX/TX Modul empfangen. Wie vorstehend beschrieben können diese Daten ein oder mehrere Konfigurationsdaten umfassen, so dass eine bestehende Konfiguration des QS-Moduls, wie sie in der Initialisierungsoperation S110 erläutert ist, aktualisiert werden kann. Ferner können die empfangenen Daten (Nachrichten) Instruktionen einschließen, die das QS-Modul als ein oder mehrere Signale (Ereignisse) in Übereinstimmung mit Operation S130 interpretiert. So kann mittels einer Datennachricht, die von dem QS-Server an das QS-Modul via den GSM RX/TX Moduls gerichtet ist, die Übertragung der in dem QS-Modul verfügbaren Daten des Datenspeichers initiiert werden, analog zu der Beschreibung des vorstehenden Absatzes bezüglich Operation S175.

Die Operation S170, S175 sind im Hinblick auf ein Modul zur mobilen Datenübertragung beschrieben worden. Es soll angemerkt werden, dass die beschriebene Funktion des Moduls ebenfalls über ein andersartiges Datenschnittstellen-Modul angewendet werden kann. So ist z.B. denkbar, dass das QS-Modul während des Betriebs mittels einer lokalen Schnittstelle an eine mikroprozessor-basierende Endbenutzervorrichtung dauerhaft oder zeitweise angeschlossen ist. Entsprechend können Daten über die Schnittstelle analog dem vorbeschriebenen empfangen als auch gesendet werden.

In einer Operation S180 liegt ein Signal vor, das anweist, die Aufzeichnung der Positions- und Zeitdaten zu beenden und ferner das QS-Modul für die Abschaltung vorzubereiten. Dieses Signal kann z.B. durch den Benutzer manuell oder durch Überschreiten einer geographischen Grenze / zeitlichen Limits ausgelöst werden. Ferner kann die Deaktivierung in Analogie zur Aktivierung in der Operation S120 sensorgesteuert bewirkt werden.

Nachfolgend ist die Fortführung des Verfahrens mit einer Operation S 190 möglich, wenn ein Beenden des Verfahrens gewünscht wird. Alternativ kann das QS-Modul wieder reaktiviert werden, indem das Verfahren mit der Operation S120 fortgeführt wird. Die Rückkehr zu der Operation S120 kann einen zwischenzeitlichen Bereitschaftsmodus für das QS-Modul umfassen, indem das QS-Modul durch Deaktivierung einer oder mehrerer seiner Komponenten (insbesondere das GPS-Modul) stromsparend betrieben wird. Beispielsweise kann eine Steuerung der Aktivierung bzw. Deaktivierung, die durch einen Bewegungssensors erfolgt, solch einen vorteilhaften Effekt erzielen.

In einer Operation S190 kann das Abschließen der Aufzeichnung der Daten mit einer letzten Aufzeichnung einer Positions- und Zeitdaten eventuell in Verbindung mit Protokolldaten erfolgen, die das Deaktivierungsereignis kodieren.

Die erfassten, aufgezeichneten und gespeicherten Daten und Resultate (siehe nachfolgend beschriebene Operation S220) können an den QS-Server mittels des GSM RX/TX Moduls oder einer anderen Datenschnittstelle bzw. durch Abschließen der Auszeichnung der Daten auf einem Speicher-Modul oder Medium übertragen werden, so dass diese mit Deaktivierung der Aufzeichnung bzw. des Betrieb des QS-Moduls zur Verfügung stehen.

In einer Operation S200 endet das Verfahren gemäß eines Ausführungsbeispiels der vorliegenden Erfindung.

Es ist ferner zu bemerken, dass die vorstehend beschriebene Speicherung der Daten bei einer unmittelbaren Datenübertragung der in dem QS-Modul generierten Daten, d.h. der Protokolldaten, Positionsdaten und/oder Zeitdaten, entfallen kann bzw. nur in Form einer Pufferspeicherung erfolgt. Diese unmittelbare Datenübertragung der von dem QS-Modul bereitgestellten Daten bietet sich insbesondere in Kombination mit dem GSM RX/TX Modul an, das einen Datenpaket-Funkdienst wie GPRS unterstützt, sodass die Daten in dem QS-Modul nur gepuffert werden, um im wesentlichen unmittelbar in dem QS-Server für eine nachfolgende Auswertung zur Verfügung zu stehen, wie es anhand einer Ausführungsform nachstehend beschrieben wird.

Zusätzlich ist ein eventuell parallel durchgeführtes Verfahren in Form eines separaten Flussdiagramms in Fig. 3 gezeigt, das die (Vor-)Bearbeitung der in dem Datenspeicher vorliegenden Daten bzw. der erfassten Daten betrifft. Die (Vor-)Bearbeitung kann derart realisiert sein, dass ein Speicherung der individuellen Daten nicht zu erfolgen hat sondern nur die aus der (Vor-)Verarbeitung resultierenden Daten gespeichert werden. Die dargestellten Verfahrensschritte müssen nicht notwendigerweise von dem QS-Modul durchgeführt werden, sondern können alternativ Teil der Auswertung der Daten durch den QS-Server erfolgen.

In einer Operation S210 wird die (Vor-)Verarbeitung der Daten begonnen.

In einer Operation S220 werden mindestens Teile der in dem Datenspeicher des QS-Moduls gespeicherten Positions- und Zeitdaten ausgelesen. Alternativ werden anfallende Daten unmittelbar der Verarbeitung zugeführt, so dass eine Speicherung der anfallenden Daten obsolet ist. Ziel der Verarbeitung ist es, Bewertungskriterien zu erhalten. Die Bewertungskriterien dienen zur Kundeninformation, Qualitätskontrolle und/oder einer Planung nachfolgender Vorgänge (Kampagnen). Die Eingaben, die mittels der Eingabe- und Bedientasten durch den Benutzer erzeugt werden, können dazu verwendet werden, um eine totale Anzahl der Eingaben mittels der Eingabe- und Bedientasten durch den Nutzer bzw. eine selektive Anzahl von speziellen (individuellen) Eingaben mittels der Eingabe- und Bedientasten durch den Nutzer zu bestimmen.

Ferner kann in Übereinstimmung mit den zur Verfügung stehenden Daten eine Art Bewegungsprofil erstellt werden. Im Zusammenhang mit einem Bewegungsprofil sind eine oder mehrere abgeleitete Größen von Interesse, die zum Beispiel eine Gesamtzeit der Aktivierung, die Anzahl der Aktivierungen des QS-Moduls und, in Verbindung mit Positionsdaten, eine lokale mittlere und/oder maximale Geschwindigkeit, eine akkumulierte und/oder maximale Standzeit, eine zurückgelegte Gesamtstrecke, eine maximale zusammenhängende Bewegungszeit bzw. Bewegungsstrecke und der gleichen einschließen. All die vorstehend genannten Größen sind entsprechend der konkreten Ausführung des QS-Moduls aus den von dem QS-Modul bereitgestellten Daten ableitbar. Die benannten ableitbaren Größen sind als nicht beschränkend zu betrachten, weitere Größen können ebenfalls abgeleitet werden.

Ferner ist es möglich, dass Daten während der Auswertung in Übereinstimmung gebracht werden. Dies kann zum Beispiel notwendig sein, wenn die Positionsdaten in dem QS-Server vorliegen, jedoch nicht in dem QS-Modul (Positions-Ortung des QS-Moduls mittels eines zellularen Mobilfunksystems, das die Positionsdaten an den QS-Server leitet), wobei das QS-Modul Eingaben mittels der Eingabe- und Bedientasten (inklusive Zeitdaten) protokolliert.

In einer Operation S230 werden die resultierenden Größen, ebenfalls als Resultate bezeichnet, gespeichert. Die Größen stehen somit zum Beispiel im Fall, dass die Verarbeitung in dem QS-Modul erfolgt, für die Übertragung auf den QS-Server zur Verfügung.

### In einer Operation S240 wird die (Vor-)Bearbeitung der Daten beendet

Es ist zu bemerken, dass das beschriebene Verfahren der (Vor-)Bearbeitung dynamische Größen umfasst, die es notwendig machen, dass zumindest in einem bestimmten Zeitintervall die Größen erneut bestimmt werden, damit sie korrekte und aussagekräftige Werte aufweisen. Die Zeitintervalle sollten an die Intervalle der Aufzeichnung von neuen Positions- und Zeitdaten und and die Verarbeitungskapazität des QS-Moduls angepasst sein, wobei der Stromverbrauch für die Vor-Verarbeitung ferner berücksichtigt werden könnte.

Die vorstehend beschriebenen Verfahren werden vorzugsweise aber nicht notwendigerweise von einem QS-Modul gemäß eines Ausführungsbeispiels der Erfindung durchgeführt. Das nachstehend beschriebene Ablaufdiagramm illustriert das Zusammenwirken der verschiedenen Systemkomponenten, wie sie in Fig. 1 vorgestellt sind.

Fig. 4 zeigt ein schematisches Flussdiagramm, das Operationen aufweist, die von den Komponenten des Systems gemäß einer erfindungsgemäßen Ausführungsform ausgeführt werden.

In einer Operation S300 werden ein Auftrag und die entsprechenden Informationen über den Auftrag von einem QS-Nutzer 400 bzw. einem QS-Nutzer-Computer an den QS-Servers 410 übermittelt. Diese Übermittlung kann mittels einer geeigneten Datenschnittstelle zum Beispiel mittels eines WEB-Browsers, eines FTP-Servers, eines E-Mail-Servers oder an ein Datenerfassungssystem wie zum Beispiel ein Arbeitsplanungs-, Arbeitsablauf- und Steuerungssystem (z.B. SAP-System) erfolgen. Der Auftrag bzw. die Informationen mögen eine Werbe-Kampagne betreffen, im Rahmen dessen innerhalb eines bestimmten geographischen Gebietes Informationsmaterial verteilt werden soll. Entsprechend dieses Beispiels können sich die entsprechenden Informationen bezüglich des Auftrags, die an den QS-Server übermittelt werden, aus folgenden Teilinformationen zusammensetzten:
Anfangs- und Endzeiten innerhalb deren die Werbe-Kampagne stattfinden soll;
geographisches Gebiet bzw. geographische Gebiete innerhalb jenen die Verteilung erfolgen soll;
geographische Fixpunkte, die von den Verteilern zu passieren sind;
Anzahl der Verteiler (Anzahl der einzusetzenden QS-Module);
Vorgabe von Zeitintervallen und/oder Abstandsintervallen für die Aufzeichnung der Positions- und Zeitdaten;
Bei Einsatz mobiler Datenübertragung mittels eines Mobilen Datenübertragungsmoduls in den QS-Modulen:
Datenübertragungsintervalle für die Übertragung von Daten von den QS-Modulen an den QS-Server;
Aktivierungsintervalle für die Überprüfen auf eingehende Daten (Nachrichten) von dem QS-Server; und
Verfahrensweise für die Übertragung von Warninformationen (bei verlassen des definierten geographischen Gebiets etc.)

In einer Operation S310 werden in dem QS-Server 410 entsprechend den definierten Informationen Vorkehrungen für den Betrieb des Systems getroffen. Die vorstehend genannten Definitionen werden dem QS-Server 410 bereitgestellt, so dass die QS-Module 420 und 430 von dem QS-Server 410 aus initialisiert und konfiguriert werden können.

Im Detail umfasst die Initialisierung S310 eine Operation S311, die die Definition und Initialisierung des QS-Servers 410 betrifft, und einen Operation S312, die die Initialisierung der einzelnen beteiligten QS-Module 420 und 430 betrifft.

Die auf dem QS-Server 410 bereitzustellenden Definition gemäß der Informationen aufgrund des Auftrags müssen eventuell noch zusätzlich nachbearbeitet werden. So kann es zum Beispiel notwendig sein, das in dem Auftrag spezifizierte geographische Gebiet oder die spezifizierten geographischen Gebiete aufzuteilen, um das geographische Gesamtgebiet auf mehrere QS-Module aufzuteilen bzw. den beteiligten QS-Modulen mehrere geographische Teilgebiete zuzuweisen. Ferner ist sicherzustellen, dass Daten, die von den QS-Modulen geliefert werden, dem richtigen Auftrag zugeordnet werden können. Hierfür können die QS-Module mit Kennungen (temporäre oder permanente Identifikatoren) versehen sein, die zumindest während der Auftragsbearbeitung eine eindeutige Zuordnung gewährleisten. Entsprechend einer Aufteilung des geographischen Gesamtgebiets auf mehrere QS-Module kann gegebenenfalls die Zuordnung der geographischen Fixpunkte erfolgen.

In der Operation S311 werden die QS-Server-seitigen Vorkehrungen getroffen.

In der Operation S312 werden die an der Kampagne beteiligten QS-Module 420 und 430 initialisiert, d.h. die Konfigurationsdaten auf die QS-Module 420 und 430 entsprechend vorstehender Definitionen übertragen. Als Beispiel sind in Fig. 4, nicht limitierend, das QS-Modul 1 (420) und das QS-Modul 2 (430) aufgeführt. Die Übermittlung der erforderlichen Konfigurationsdaten kann über die in Fig. 1 und Fig. 2a beschriebenen Schnittstellen erfolgen.

In einer Operation S320 empfängt das QS-Modul 1 (420) die für es bestimmten Konfigurationsdaten. Die Konfiguration bzw. Initialisierung erfolgt entsprechend der vorstehend beschriebenen Operation S110. Analog empfängt in einer Operation S325 das QS-Modul 2 (430) die für es bestimmten Konfigurationsdaten.

In einer Operation S330 stellt der QS-Server 410 eine Zugriffschnittstelle für den QS-Nutzer 400 bereit, um diesem den Zugriff auf die in dem QS-Server 410 gespeicherten Daten zu ermöglichen, die direkt oder indirekt auf den in den QS-Moduten 420 und 430 gespeicherten Daten basieren.

Im Falle des Einsatzes von QS-Modulen, die mobile Datenübertragung während des Betriebs ermöglichen, kann eine Überwachung im wesentlichen in Echtzeit ermöglicht werden (d.h. im Rahmen der vorbestimmten Übertragungsintervalle oder durch Übertragung einer Instruktion, die die Datenübertragung initiiert). Im Falle, dass keine mobile Datenübertragung erwünscht oder möglich ist, stehen die entsprechenden Daten nach dem Auslesen der Daten aus den beteiligten QS-Modulen bereit.

In einer Operation S340 ist die erfindungsgemäße Auszeichnung von Daten (Positions-, Zeit, Protokoll und/oder Resultatdaten) durch das Modul 1 (420) aktiv. Die entsprechenden Operationen, die von dem Modul 1 (420) während der Operation S340 durchgeführt werden, sind im Detail in Zusammenhang mit den Operationen S 120 bis S200 und, wenn implementiert, den Operationen S210 bis S240 beschrieben.

Im Detail ist im folgenden die Operation S340 in die wichtigsten Teiloperationen S331, S332 und S333 separiert. In einer Operation S341, die insbesondere den Operationen S140 bis S160 entspricht, werden Daten von dem Modul 1 (420) aufgezeichnet und in dem Datenspeicher abgelegt. In einer optionalen Operation S342, die insbesondere den Operationen S220 und S230 entspricht, werden die erfassten Daten in dem Datenspeicher vorausgewertet, um aussagekräftige und intuitive Bewertungsgrößen zu erhalten. In einer Operation S343, die insbesondere den Operationen S180 bis S200 entspricht, wird die Datenerfassung durch das Modul 1 (420) beendet.

In einer Operation S350 ist die erfindungsgemäße Auszeichnung von Daten (Positions-, Zeit, Protokoll und/oder Resultatdaten) durch das Modul 2 (430) aktiv. Die entsprechenden Operationen, die von dem Modul 2 (430) während der Operation S340 durchgeführt werden, sind im Detail in Zusammenhang mit den Operationen S120 bis S200 und, wenn implementiert, den Operationen S210 bis S240 beschrieben.

Im Detail ist im folgenden die Operation S340 in die wichtigsten Teiloperationen S351, S352 und S353 separiert. In einer Operation S351, die insbesondere den Operationen S140 bis S 160 entspricht, werden Daten von dem Modul 2 (430) aufgezeichnet und in dem Datenspeicher abgelegt. In einer optionalen Operation S352, die insbesondere den Operationen S220 und S230 entspricht, werden die erfassten Daten in dem Datenspeicher vorausgewertet, um aussagekräftige und intuitive Bewertungsgrößen zu erhalten. In einer Operation S353, die insbesondere den Operationen S220 und S230 entspricht, werden die erfassten Daten in dem Datenspeicher vorausgewertet, um aussagekräftige und intuitive Größen zu erhalten.

Im Falle des Einsatzes von QS-Modulen, die mobile Datenübertragung während des Betriebs anbieten, kann eine Überwachung im wesentlichen in Echtzeit erfolgen, indem in einer Operation S331 Daten von dem Modul 1 (420) und/oder von dem Modul 2 (430) empfangen werden. Die Daten werden von den Modulen 420 und 430 an den QS-Server gesendet, wie in Bezug auf Operation S175 beschrieben, wobei die zu übertragenden Daten zumindest Teile der erfasste Daten, der gespeicherten Daten und/oder der Resultate der Auswertung (zum Beispiel durch die Konfiguration zuvor festgelegt) einschließen können. Die Datenübertragung wird durch das zuvor definierte Datenübertragungsintervall bestimmt oder durch ein Initiierungssignal (-Nachricht) veranlasst. Ferner kann der QS-Server in der Operation S331 Nachrichten von den beteiligen Modulen 420 und 430 empfangen, wie zum Beispiel Betreten bzw. Verlassen eines vorbestimmten definierten geographischen Gebiets, Aktivierung bzw. Deaktivierung des Moduls und weiter (vergleiche hierzu die Operationen S120, S145, S 175 und S 190).

Im Falle des Einsatzes von Modulen, die mobile Datenübertragung während des Betriebs anbieten, können in einer Operation S332 Konfigurationsdaten an eines, mehrere oder alle beteiligten QS-Module gesendet werden, um eine Umkonfiguration während des Betriebs zu veranlassen. Diese Umkonfiguration kann einen einzelnen Konfigurationsparameter oder mehrere Konfigurationsparameter des/der QS-Moduls/QS-Module betreffen. Die von dem QS-Server 410 initiierten Datenübertragungen an ein oder mehrere QS-Module 420 und/oder 430 werden entsprechend der gültigen Aktivierungsintervalle für das jeweilige QS-Modul 420 bzw. 430 empfangen.

Die Operationen S331 und/oder S332 können, wenn gewünscht oder erforderlich, mehrfach abgearbeitet werden, aber die Operationen sind nicht zwingend für den erfindungsgemäßen Ablauf des Verfahrens notwendig. Weiterhin kann eine mobilen Datenübertragung, wie sie der Operationen S331 zugrunde gelegt wird, eingesetzt werden, die Daten der QS-Module in der Operation S331 unmittelbar mit deren Erfassen bzw. Erzeugen durch die QS-Module zu empfangen, um die Daten im wesentlichen in Echtzeit in dem QS-Server vorliegen zu haben. Hierbei können neben den vorstehend beschriebenen Protokoll-, Positions- und/oder Zeitdaten zusätzlich oder alternativ Resultate einer Vorbearbeitung empfangen werden, die durch die QS-Module gemäß einer Ausführungsform erfolgen kann. Vorzugsweise sollte die Datenauswertung jedoch im Fall der Datenübertragung in Echtzeit durch den QS-Server erfolgen.

In einer Operation S333 werden die Daten mit der Beendigung des Betriebs des Moduls 1 (420) und/oder Moduls 2 (430) an den QS-Server 410 übertragen. Die Übermittlung der in dem jeweiligen Modul verfügbaren Daten oder Teile der verfügbaren Daten kann über die in Fig. 1 und Fig. 2a beschriebenen Schnittstellen oder mittels des Austauschs der entfernbar gekoppelten Speicher-Module (Medien) erfolgen. Die Daten stehen spätestens mit der abschließenden Übertragung der von den Modulen 420 und 430 gespeicherten Daten in dem QS-Server bereit.

Die Verarbeitung der Daten in dem QS-Server 410 sieht eine aussagekräftige und intuitive Präsentation der Daten für den QS-Nutzer 400 (Auftraggeber) vor. Wie vorstehend beschrieben werden aus den von den QS-Modulen erfassten Positions-, Zeit und Protokolldaten Größen abgeleitet, die eine Qualitätsbewertung erlauben. Dies ist in Fig. 3 unter Bezug auf die Operationen S210 bis S240 detailliert beschrieben. Wenn diese Auswertung nicht unmittelbar in den Modulen erfolgt, wird das beschriebene Verfahren entsprechend von dem QS-Server 410 auf die verfügbaren Daten angewendet. Ferner können die Positionsdaten verwendet werden, um einen oder mehrere geographische Pfade nachzubilden, entlang dem/denen die eingesetzten QS-Module bewegt wurden. Zusätzlich können die abgeleiteten Größen z.B. in den oder die nachgebildeten Pfade zum Beispiel durch eine geeignete Farbkodierung oder durch zusätzlich eingeblendete Symbole eingebettet werden. Ferner können die abgeleiteten Größen mittels eines geeigneten Bewertungsalgorithmus kombiniert werden, der vorzugsweise parametrisierbar ist, so dass auf den Bewertungsalgorithmus zum Beispiel durch den QS-Nutzer 400 oder einen Administrator des QS-Servers 410 Einfluss genommen werden kann. Vorteilhafterweise kann der Pfad bzw. können die Pfade in Kombination mit Kartendaten dargestellt werden, insbesondere in Kombination mit digitalen Straßenkarten, so dass die zurückgelegte Wegstrecke(n) exakt nachvollziehbar und überprüfbar ist/sind.

Die Auswertung der durch die QS-Module 420 und 430 zusätzlich verfügbaren Protokolldaten, die aus manuellen Eingaben der Bediener der QS-Module 420 und 430 resultieren, können ferner dazu dienen, sowohl die Verteilbereitschaft jeweiliger Verteiler zu bewerten als auch geographische Gebiete nach einem Erfolg der Zustellung zu klassifizieren. Aus den Protokolldaten kann eine Soll-Datenbasis betreffend der Anzahl der Haushalte, der Haushalt-Typen etc. erstellt werden. Ferner kann eine eventuell vorhandene Robinson-Liste, in der Personen eingetragen sind, die keine Zustellung wünschen ergänzt werden bzw. eine Art Robinson-Liste für geographische Gebiete erstellt werden.

Bevorzugterweise können Teilmengen der gesamten Daten separat dargestellt werden, das heißt zum Beispiel, dass nur die von einem speziellen QS-Modul erfassten Daten entsprechend dargestellt werden oder nur Daten eines speziellen geographischen Teilgebiets illustriert werden. Damit ist eine Einzelüberwachung von Verteilern, die ein QS-Modul tragen möglich bzw. der Erfolg einer Verteilung in bestimmten geographischen Gebieten (Stadtteilen, Straßenzügen) auswertbar.

Ferner können die durch die Benutzer der QS-Module 420 und 430 manuell eingegebenen Daten in der Pfaddarstellung speziell illustriert werden oder getrennt in Form zum Beispiel von Listen präsentiert werden.

In einer Operation S360 ist der QS-Nutzer 400 in der Lage, die von dem QS-Server 410 bereitgestellten Daten über die von dem QS-Server 410 zur Verfügung gestellte Schnittstelle (z.B. Schnittstelle 360) abzurufen. Vorzugsweise basiert die Schnittstelle auf WEB-Technologien und unterstützt die vorstehend beschriebenen Formen der Datenrepräsentation. Die Kombination der von dem QS-Server bereitgestellten Daten mit weiteren Daten wie zum Beispiel Kartendaten kann direkt auf dem QS-Server 410 als auch auf der Nutzereinheit des QS-Nutzers 400 erfolgen, die der QS-Nutzer für den Zugriff auf die Daten des QS-Servers 410 verwendet.

Im Falle des Einsatzes von Modulen, die mobile Datenübertragung während des Betriebs anbieten, kann der QS-Nutzer 400 in Operationen S361 und S362 die während des Betriebs der QS-Module 420 und 430 auf dem QS-Server 410 verfügbaren Daten abrufen bzw. die Aktualisierung der auf dem QS-Server verfügbaren Daten veranlassen um sie später abzurufen. Der QS-Nutzer 400 kann hierdurch praktisch jederzeit den aktuellen Status der Kampagne überprüfen und gegebenenfalls eine Umkonfiguration der für die Kampagne eingesetzten QS-Module 420 und 430 veranlassen, wenn er dies wünscht oder wenn es erforderlich erscheint.

In einer Operation S363 wird dem QS-Nutzer 400 die Möglichkeit geboten auf die von QS-Server 410 bereitgestellten Daten nach Abschluss der Kampagne (nach Deaktivierung der Module 420 und 430) zuzugreifen, um eine umfassende und abschließende Auswertung der Kampagne anhand der von dem QS-Server 410 angebotenen Datenrepräsentation vorzunehmen. Die Datenrepräsentation des QS-Servers 410 kann interaktiv gestaltet werden, so dass der QS-Nutzer 400 die Art und Weise der Datenrepräsentation an seine Bedürfnisse und Wünsche anpassen kann.

Der QS-Server 410 ist in der Lage sowohl mehrerer Kampagnen von verschiedenen QS-Nutzem parallel zu bearbeiten als auch eine Vielzahl an QS-Modulen zu verwalten und die eingesetzten QS-Module der jeweiligen Kampagne eindeutig und korrekt zuzuordnen.

Zusätzlich kann der Zugriff auf die von dem QS-Server 410 bereitgestellten Daten durch den QS-Nutzer 400 eine Authentifizierung des QS-Nutzers 400 erfordern, was einerseits eine eindeutige Zuordnung des Zugriffs auf die korrekten Daten ermöglicht und andererseits die Vertraulichkeit der von dem QS-Server 410 bereitgestellten Daten gewährleistet.

Ein weiteres Ausfiihrungsbeispiel, das abschließend präsentiert werden soll, ermöglicht, Kartendaten, die über ein geographisches Gebiet vorliegen, zu ergänzen, zu aktualisieren und/oder zu modifizieren. Während einer Verteilung von Informationsmaterial im Zuge einer Kampagne werden von den mit der Verteilung beauftragten Personen, die die QS-Module mit sich führen, ein oder mehrere geographische Gebiete (z.B. Straßenzüge, Stadteile etc.) im wesentlichen systematisch abgearbeitet. Die durch die QS-Module bereitgestellten Eingabemöglichkeiten (Eingabe-/Bedientasten) können derart konfiguriert sein, dass die beauftragten Personen geographische Besonderheiten in den Datenspeichern der QS-Module protokollieren können. Als geographische Besonderheiten sind zum Beispiel die Anzahl von Haushalten, die Typen von Haushalten, etc. zu nennen. Ferner können als geographische Besonderheiten ebenfalls eine Baustelle, eine Umleitung, eine Veränderung der Verkehrsführung, eine zeitweilige Sperrung einer Straße, eine neue Straße (in einem Neubaugebiet) etc. zu nennen. Die anschließende Auswertung der von den QS-Modulen bereitgestellten Daten erlaubt es, ergänzende Daten zu vorhandenen Kartendaten zu liefern, die eine hohe Aktualität habe und so den Wert der Kartendaten deutlich erhöhen können.

Obwohl die Erfindung speziell in Bezug auf die dargelegten Ausführungsformen aufgezeigt wurde, ist für Fachleute, die mit dem Stand der Technik vertraut sind, klar ersichtlich, dass Änderungen an oder in der Form oder in Details ausgeführt werden können, ohne dass der Geist und der Schutzumfang der durch die angefügten Ansprüche definierten Erfindung zu verlassen.

## Patentansprüche

1. Vorrichtung zum Erfassen und Dokumentieren von Protokolldaten, insbesondere zum Protokollieren der Tätigkeit einer Person, die die Vorrichtung (10, 420, 430) bei sich führt,
wobei die Vorrichtung folgende Komponenten umfasst:
- eine Eingabekomponente (220, 221, 225) zum Erfassen von Eingaben, um Protokolldaten zu erzeugen, die während einer Fortbewegung auftretende Ereignisse enthalten;
- eine Speicherkomponente (211) zum Speichern der Protokolldaten; und
- eine Komponente zum Auslesen (211, 230, 235, 260, 270) der Protokolldaten.

2. Vorrichtung gemäß Anspruch 1, umfassend:
- eine Erfassungskomponente (240) zum Erfassen von Positionsdaten;
wobei die Speicherkomponente (211) geeignet ist, die Positionsdaten zu speichern und
die Protokolldaten in Bezug zu mindestens einem Teil der erfassten Positionsdaten stehen und diesen zugeordnete Ereignisse enthalten.

3. Vorrichtung gemäß Anspruch 1 oder Anspruch 2, wobei das Verfahren insbesondere dazu dient, die Tätigkeit einer mit einer Verteilung von Zustellsendungen beauftragten Person zu protokollieren, wobei die Protokolldaten Zustellereignisse betreffen, die insbesondere die Ereignisse "Zustellung erfolgt" und "Zustellung verhindert" einschließen.

4. Vorrichtung gemäß einem der vorstehenden Ansprüche, umfassend:
- eine Komponente zum Ableiten von einem oder mehreren Bewertungskriterien aus den Daten; wobei
- die Speicherkomponente (211) zum Speichern des einen oder der mehreren Bewertungskriterien zusätzlich zu den Daten geeignet ist.

5. Vorrichtung gemäß einem der vorstehenden Ansprüche, wobei der Vorrichtung Konfigurationsdaten bereitgestellt werden, wobei die Komponenten der Vorrichtung mittels wenigstens einem Teil der Konfigurationsdaten konfigurierbar sind.

6. Vorrichtung zum Auswerten von Protokolldaten, insbesondere zum Auswerten von Protokolldaten, die von einer oder mehreren Vorrichtungen zum Erfassen und Dokumentieren von Protokolldaten geliefert werden,
wobei die Vorrichtung (21, 410) folgende Komponenten umfasst:
- eine Komponente (340, 25, 27) zum Bereitstellen von Daten, die in der einen oder den mehreren Vorrichtungen (10, 420, 430) zum Erfassen und Dokumentieren von Protokolldaten gespeichert sind;
- eine Komponente (311) zum Ableiten von einem oder mehreren Bewertungskriterien aus den Daten; und
- eine Schnittstellenkomponente (360) zum Übertragen von einem oder mehreren Bewertungskriterien mittels einer Datenkommunikationsverbindung zu einer weiteren verarbeitenden Vorrichtung (23, 400).

7. Vorrichtung gemäß Anspruch 6, aufweisend:
- eine Komponente (311) zum Kombinieren zumindest eines Teils der gespeicherten Daten mit dem einen oder den mehreren Bewertungskriterien, um eine Bewertung zu ermöglichen.

8. Vorrichtung gemäß Anspruch 6 oder Anspruch 7, aufweisend
- eine Komponente (330) zum Darstellen der kombinierten Daten und Bewertungskriterien in einer Weise, dass die Darstellung von der weiteren verarbeitenden Vorrichtung (23, 400) über eine Datenkommunikationsverbindung abgerufen werden kann.

9. Vorrichtung gemäß einem der vorstehenden Ansprüche 6 bis 8, umfassend:
- Konfigurationsdaten für die eine oder mehreren Vorrichtungen (10, 420, 430) zum Erfassen und Dokumentieren von Protokolldaten; und
- eine Schnittstellenkomponente (340) zum Übertragen der Konfigurationsdaten an die eine oder mehreren Vorrichtungen (10, 420, 430) zum Erfassen und Dokumentieren von und Protokolldaten.

10. Verfahren zum Erfassen und Dokumentieren von Protokolldaten, umfassend:
- Erzeugen (S160, S165) von Protokolldaten, die mittels einer Eingabekomponente (220, 225) erfasst werden und während einer Fortbewegung auftretende Ereignisse enthalten, wobei die Ereignisse insbesondere Zustellereignissen "Zustellung erfolgt" und "Zustellung verhindert" betreffend;
- Speichern (S155, S165) der Daten in einer Speicherkomponente (211); und
- Auslesen (S175, S190) von mindestens einem Teil der in der Speicherkomponente (211) gespeicherten Daten.

11. Verfahren gemäß Anspruch 10, umfassend:
- Erfassen von Positionsdaten (S150, S160) mittels einer Komponente zum Erfassen von Positionsdaten;
wobei die Positionsdaten in der Speicherkomponente gespeichert werden und
die Protokolldaten in Bezug zu mindestes einem Teil der erfassten Positionsdaten stehen.

12. Verfahren gemäß Anspruch 10 oder Anspruch 11, umfassend:
- Ableiten (S220) von einem oder mehreren Bewertungskriterien aus den gespeicherten Daten; und
- Speichern (S230) des einen oder der mehreren Bewertungskriterien zusätzlich zu den Daten in der Speicherkomponente(211).

13. Verfahren gemäß einem der Ansprüche 10 bis 12, umfassend:
- Empfangen (S110) von Konfigurationsdaten;
wobei ein oder mehrere der Verfahrensschritte in Übereinstimmung mit den Konfigurationsdaten ausgeführt werden.

14. Verfahren gemäß einem der Ansprüche 10 bis 13, wobei das Übertragen (S170, S175) des mindestens einen Teil der gespeicherten Daten durch ein Signal initiiert wird, das via die Schnittstellenkomponente (230, 235, 260) von der Vorrichtung (21, 410) zum Auswerten der Positions- und Protokolldaten empfangen wird.

15. Verfahren zum Auswerten von Protokolldaten, insbesondere zum Auswerten von Daten, die von einer oder mehreren Vorrichtungen (10, 420, 430) zum Erfassen von Positions- und Protokolldaten geliefert werden,
wobei das Verfahren (S330) folgende Operationen umfasst:
- Bereitstellen (S331, S333) von Daten, die in der einen oder den mehreren Vorrichtungen (10, 420, 430) zum Erfassen und Dokumentieren von Protokolldaten gespeichert sind, wobei die Daten zumindest Protokolldaten umfassen;
- Speichern (S331, S333) der empfangenen Daten in einer Speicherkomponente (311);
- Ableiten (S220) von einem oder mehreren Bewertungskriterien aus den gespeicherten Daten; und
- Übertragen (S330) der Bewertungskriterien mittels einer Datenkommunikationsverbindung an eine weitere verarbeitende Vorrichtung.

16. Verfahren gemäß Anspruch 15, umfassend:
- Kombinieren (S220) zumindest eines Teils der gespeicherten Daten mit dem einen oder den mehreren Bewertungskriterien, um eine Bewertung zu ermöglichen.

17. Verfahren gemäß Anspruch 15 oder Anspruch 16, umfassend:
- Darstellen (S330) der Daten und/oder Bewegungskriterien in einer Weise, dass die Darstellung von der weiteren verarbeitenden Vorrichtung (23, 400) über eine Datenkommunikationsverbindung abgerufen werden kann.

18. Verfahren gemäß einem der Ansprüche 15 bis 17, umfassend:
- Übertragen (S312, S332) von Konfigurationsdaten an eine oder mehrere Vorrichtungen (10, 420, 430) zum Erfassen und Dokumentieren von Protokolldaten.

19. System zum Erfassen und Auswerten von Protokolldaten, umfassend:
- mindestens eine Vorrichtung (10, 420, 430) zum Erfassen und Dokumentieren von Protokolldaten gemäß einem der vorstehenden Ansprüche 1 bis 5; und
- eine Vorrichtung zum Auswerten (21, 410) von Protokolldaten gemäß einem der vorstehenden Ansprüche 5 bis 9.

20. Verfahren zum Betreiben eines Systems zum Erfassen und Auswerten von Protokolldaten, aufweisend mindestes eine Vorrichtung (10, 420, 430) zum Erfassen von Positions- und Protokolldaten und eine Vorrichtung (21, 410) zum Auswerten von Positions- und Protokolldaten,
wobei das Verfahren die Operationen gemäß einem der vorstehenden Ansprüche 10 bis 14 und die Operationen gemäß einem der vorstehenden Ansprüche 15 bis 18 umfasst.

21. Computerprogramm-Produkt zum Erfassen und/oder Auswerten von Protokolldaten, das ladbare Programmcodeabschnitte zur Ausführung der Operationen gemäß einem der Ansprüche 10 bis 18 und 20 aufweist, wenn das Computerprogramm auf einer mikroprozessor-basierenden Vorrichtung, einem Netzwerk-basierenden Computer, einem Terminal oder einem Kommunikationsterminal ausgeführt wird.

22. Computerprogramm-Produkt zum Erfassen und/oder Auswerten von Protokolldaten, wobei das Computerprogramm-Produkt ein Computerprogramm mit Programmcodeabschnitte umfasst, die auf einem Computer-lesbaren Medium gespeichert sind, um das Verfahren gemäß einem der Ansprüche 10 bis 18 und 20 auszuführen, wenn das Computerprogramm-Produkt auf einer mikroprozessor-basierenden Vorrichtung, einer Netzwerk-basierenden Computer, einem Terminal oder einem Kommunikationsterminal ausgeführt wird.

23. Computer-Datensignal, das in einer Trägerwelle enthalten ist und ein Programm darstellt, das, wenn es durch einen Mikroprozessor ausgeführt wird, das Verfahren gemäß einem der vorstehenden Ansprüche 10 bis 18 und 20 ausführt.
